# EUROPÄISCHE PATENTSCHRIFT

(11) **EP 3 478 474 B1**
(45) Veröffentlichungstag und Bekanntmachung des Hinweises auf die Patenterteilung: **04.08.2021**
(21) Anmeldenummer: 17733419.0
(22) Anmeldetag: 22.06.2017
(51) Int. Cl.: B29C 48/92

(54) **STEUERUNGSVORRICHTUNG ZUR HERSTELLUNG UND/ODER BEHANDLUNG EINER KUNSTSTOFF-FOLIE SOWIE ZUGEHÖRIGES VERFAHREN**
CONTROL APPARATUS FOR PRODUCING AND/OR HANDLING A PLASTIC FILM AND ASSOCIATED METHOD
DISPOSITIF DE COMMANDE POUR LA FABRICATION ET/OU LE TRAITEMENT D'UNE FEUILLE PLASTIQUE ET PROCÉDÉ ASSOCIÉ

(30) Priorität: 01.07.2016 DE 102016112121
(43) Veröffentlichungstag der Anmeldung: 08.05.2019
(73) Patentinhaber: Brückner Maschinenbau GmbH & Co. KG, 83313 Siegsdorf (DE)
(72) Erfinder: LÖSSL, Simon, 83334 Inzell (DE); WAGNER, Wilhelm, 5431 Kuchl (AT); ZINTZ, Wolfgang, 83377 Vachendorf (DE)
(74) Vertreter: Flach Bauer Stahl Patentanwälte Partnerschaft mbB
(86) Internationale Anmeldenummer: PCT/EP2017/065369
(87) Internationale Veröffentlichungsnummer: WO 2018/001852

(56) Entgegenhaltungen:
- EP-A1- 0 505 960
- CN-A- 105 437 493
- CN-Y- 201 195 393
- DE-A1-102013 007 669
- US-A1- 2009 243 133

## Beschreibung

Die Erfindung beschreibt eine Steuerungsvorrichtung zur Herstellung und/oder Behandlung einer Kunststoff-Folie insbesondere in Form einer Folienherstellungsanlage sowie ein zugehöriges Verfahren.

Die erfindungsgemäße Steuerungseinrichtung soll sich dabei auf den gesamten möglichen Herstellungsprozess zur Herstellung von Folien, insbesondere Flachfolien beziehen. Dazu gehört auch die Herstellung von Cast-Filmen. Ebenso gehört zum Rahmen der Erfindung die Herstellung von sogenannten Blasfolien, deren Herstellungsverfahren häufig auch als Double Bubble Blow-Verfahren bezeichnet wird.

Mit anderen Worten bezieht sich die Erfindung auf alle möglichen Herstellverfahren zur Herstellung von Kunststofffolien, wobei dem Fachmann die Herstellung von derartigen Flachfolien einmal auf den unterschiedlichen Arten von Reckanlagen einschließlich der Herstellung von Cast-Filmen wie auch die Herstellung von Blasfolien einschließlich der erwähnten Double Bubble Blas-Folien grundsätzlich bekannt ist. Es wird insoweit auf vorbekannte Lösungen verwiesen.

Die Steuerungseinrichtung soll sich auf die gesamte Herstellungsanlage für Folien bzw. Cast-Filme beziehen und nicht nur auf die Reckanlage, d.h. beginnend von der Granulatzufuhr bzw. der Polymerisation bis zur fertigen Endfolie. Die sequentielle oder simultane Reckung der Folie ist nur ein Teil der gesamten Produktionsanlage, auf den wir uns nicht beschränken wollen.

Das erfindungsgemäße Verfahren ist ebenso auf sog. Cast-Film Anlagen anzuwenden. Die entsprechenden Anlagenkomponenten sind dem Fachmann geläufig. Prinzipiell ist das Steuerungsverfahren auch auf Blasfolien- und Double-Bubble-Verfahren anwendbar.

Bei der Folienherstellung handelt es sich um sehr komplexe Produktionsanlagen, bei denen eine Vielzahl von Maschinen- und Prozessgrößen auftritt, die durch eine zentrale Steuerung vorgenommen werden muss. Dabei muss eine Vielzahl von Daten miteinander verknüpft werden. Vor allem geht in die korrekte Inbetriebnahme und Steuerung einer derartigen Anlage ein beachtlicher Umfang an empirisch gewonnenen Erfahrungswerten ein. Mit anderen Worten ist der Erfahrens- und Wissensschatz der beteiligten Verfahrensingenieure sowie der die Anlage bedienenden Personen von großer Bedeutung.

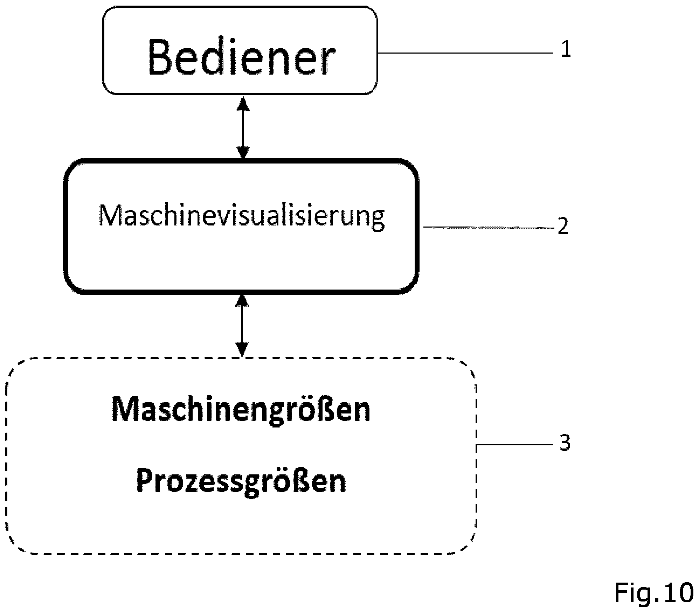

Anhand von Figur 10 ist in schematischer vereinfachter Darstellung der Grundaufbau bzw. das Grundschema einer bisherigen Steuerungsvorrichtung, d.h. einer bisherigen Maschinensteuerung für derartige Folienherstellungsanlagen gezeigt, mit der beispielsweise eine Folie mit bestimmten Produkteigenschaften erzeugt werden kann. Dazu müssen in geeigneter Weise die jeweiligen Produktionsgrößen der einzelnen Verfahrensschritte (z.B. die Extrusion, Vorfolienfertigung, Längs- und/oder Querreckung etc.) mittels der Maschinengrößen durch das Können des Verfahrensingenieurs und/oder des Bedieners und durch empirische Daten miteinander verknüpft werden.

Beim Betrieb einer derartigen Folienherstellungsanlage werden an den einzelnen Komponenten der Folienherstellungsanlage beispielsweise m Maschinengrößen (wobei m ein Wert über 1000 darstellt) über die Messtechnik ermittelt, d.h. beispielsweise Messwerte wie die Temperatur oder der Druck etc.

Um eine bestimmte Prozessgröße zu erhalten, müssen dann die Maschinengrößen über eine Steuerungstechnik eingestellt und geregelt werden.

Dabei sind alle Maschinen- und Prozessgrößen voneinander abhängig. Davon wiederum sind die Produkteigenschaften abhängig.

In der erwähnten Figur 10 ist dabei eine die Anlage bedienende Person (oder mehrere Personen) mit P bezeichnet, die über eine sogenannte Maschinenvisualisierung MV die gesamte Steuerungsvorrichtung oder -einrichtung E steuert, wobei die Maschinenvisualisierung MV Teil der gesamten Steuerungseinrichtung ist.

Die anhand von Figur 10 erläuterte Maschinenvisualisierung hat bei der Vielzahl der Messgrößen, Parameter etc., die berücksichtigt, kontrolliert, überprüft und/oder unterschiedlich eingestellt werden müssen, einen beachtlichen und sehr unübersichtlichen Gesamtaufbau zur Folge.

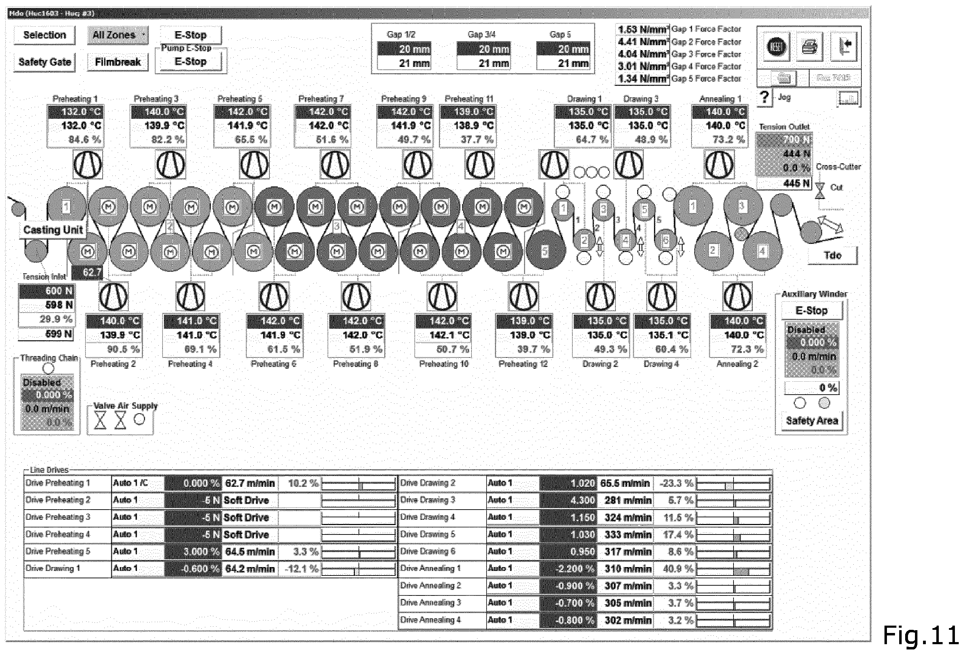

Dies soll nur ganz schematisch anhand von Figur 11 für eine nach dem Stand der Technik bekannte Lösung nur für eine Längsreckanlage (MDO, machine direction orienter, also ohne Querreckeinrichtung) angedeutet werden.

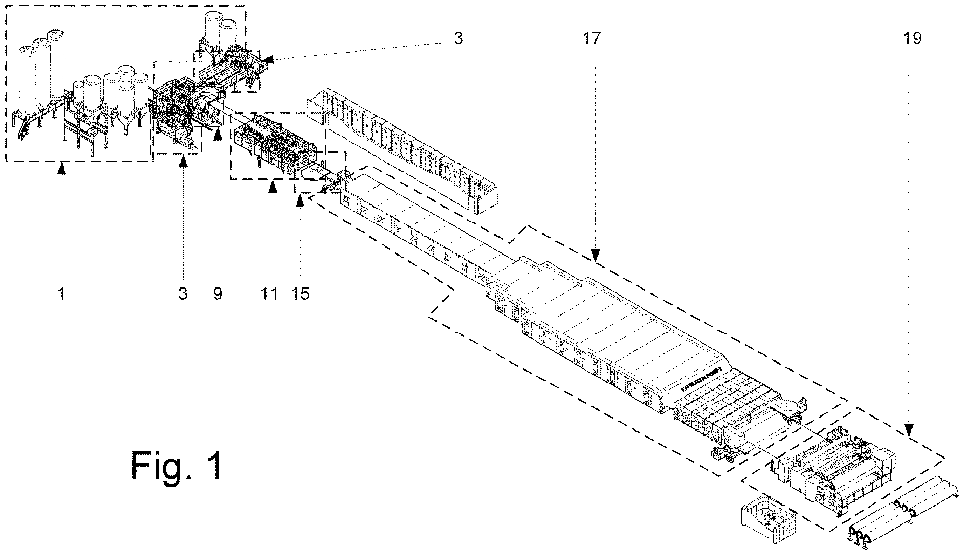

Dabei sind in Figur 11 in der Mitte von links nach rechts verlaufend die einzelnen Stationen der Längsreckanlage angedeutet, mit einzelnen Walzenpaaren, die zu verschiedenen Vorheizgruppen VH1 bis VH12 (dies ist nur beispielhaft) hinsichtlich einer spezifischen Längsreckanlage gehören können, wobei diese Walzen dann von Längsreckwalzen LW gefolgt werden, wobei jeweils ein Paar von Längsreckwalzen durch die unterschiedliche Umdrehungsgeschwindigkeit einzelne Längsreckstufen ergeben. Diesen Längsreckstufen LR1 bis LR4 können dann beispielsweise Hitzenachbehandlungswalzen NH1 bis NH4 folgen, bevor die Folie dann einer Querreckung (siehe auch Bezugszeichen 17 in der später noch erläuterten Figur 1) bzw. einer optionalen Beschichtungsanlage (entspricht Bezugszeichen 15 in der später noch erläuterten Figur 1) zugeführt wird.

Eingangsseitig ist in der Regel die sogenannte Casting Unit (entspricht Bezugszeichen 9 in der später noch erläuterten Figur 1) vorgeschaltet, also jene Walzeneinheit, bei der der Schmelzefilm üblicherweise an eine Kühlwalze (Chill Roll) übergeben und durch ein Wasserbad hindurchgeführt wird, bevor der Cast-Film den ersten Vorheizwalzen der MDO zugeführt wird.

Auf einer derartigen Displayanordnung gemäß Figur 11 ist dann oberhalb und unterhalb der vorstehend erläuterten Komponenten der Längsreckanlage, oder verallgemeinert einer Folienherstellungsanlage, eine Vielzahl von Parameter, Maschinengrößen, Temperaturwerte etc. ablesbar, kontrollierbar und/oder einstellbar, weil durch die Veränderung der Maschinengrößen dann so eingewirkt werden soll, dass die darüber erzeugte Materialbahn insbesondere in Form eines Kunststoff-Folienfilms möglichst exakt in den einzelnen Stufen und Schritten des Herstellungsprozesses jene Werte aufweist, die erfahrungsgemäß dann zu dem Endprodukt führen, welches genau die gewünschten End-Produkteigenschaften aufweist.

Dabei vermittelt Figur 11 ein Beispiel einer Maschinenvisualisierung MV für ein Längsreckwerk, um einen Eindruck der Einflussgrößen zu vermitteln, wie beispielsweise der Maschinengrößen in Form der Soll- und Ist-Temperaturen der einzelnen Längsreckwalzen, der Drehmomente, der Reckspalte etc.

Die m Werte der Maschinengrößen beeinflussen natürlich die Produktionsgrößen, wie hier das Längsreckverhältnis, die Temperaturen vor und nach den einzelnen Walzen, den Einsprung der Folie usw. Diese Produktionsgrößen werden natürlich durch die vorherigen Prozessschritte beeinflusst, und die nachfolgenden Prozesse werden durch diesen Schritte bestimmt.

Analoges gilt natürlich für die Produkteigenschaften.

Durch Empirie und den Erfahrungsschatz der Verfahrensingenieure/Bediener werden die gewünschten Produkteigenschaften erzielt.

Wichtig dabei anzumerken ist, dass die Anzahl n der Prozessgrößen wesentlich geringer ist als die Anzahl der Maschinengrößen, n << m.

Diese Einstellungen stellen aber keineswegs das Optimum für die Prozessgrößen dar, es ist durchaus wahrscheinlich, dass zumindest eine Produkteigenschaft, z.B. der Haze-Wert, also der Wert für die Trübung des Films, oder eine Produktionsgröße, z.B. der Energieverbrauch optimiert werden kann. Die von einem Kunden geforderten Produkteigenschaften könnten also verbessert und der Energieverbrauch minimiert werden.

Ergänzend soll auch darauf hingewiesen werden, dass neben den erläuterten Folienherstellungsanlagen auch noch die Herstellung von so genannten Cast-Filmen von Bedeutung sein kann, und zwar in Form einer sogenannten Cast-Film-Anlage. Es handelt sich dabei in der Regel um einen Anlagentyp, bei welchem eine Kunststoffschmelze über eine breite Düse auf eine Kühlwalze gegeben wird, und dann dieser vergleichsweise dicke Kunststoff-Film oder diese dicke Kunststoff-Folie dann keinem weiteren Reckprozess unterzogen wird. Der so erhaltene vergleichsweise dicke Kunststoff-Film kann dann beispielsweise in einem Tiefziehverfahren in einem späteren Verfahrensschritt weiter bearbeitet werden.

Prinzipiell ist das beanspruchte Steuerungsverfahren ebenso auf Folienherstellungsanlagen nach den bekannten Blasfolien und Double-/Tri-Bubble-Verfahren und dergleichen einsetzbar.

Aufgabe der vorliegenden Erfindung ist es - ausgehend von diesem Stand der Technik - eine verbesserte Steuerungsvorrichtung zur Herstellung und/oder Behandlung einer Kunststoff-Folie sowie ein verbessertes zugehörigen Verfahren zur Steuerung einer derartigen Folienanlage zu schaffen, bei dem die gesamte Bedienung gegenüber herkömmlichen Steuerungsvorrichtungen mit den zugehörigen Maschinenvisualisierungen verbessert und erleichtert ist.

Die Aufgabe wird hinsichtlich der Steuerungsvorrichtung entsprechend dem Anspruch 1 und hinsichtlich eines Verfahrens entsprechend den im Anspruch 9 angegebenen Merkmalen gelöst.

Vorteilhafte Ausgestaltungen der Erfindung sind in den Unteransprüchen angegeben.

Die erfindungsgemäße Lösung zeichnet sich unter anderem dadurch aus, dass durch eine erfindungsgemäße sich vom Stand der Technik völlig unterscheidende Struktur und den sich vom Stand der Technik unterscheidenden Aufbau der Gesamtsteuerung es sehr viel leichter ist, entsprechende Filme, insbesondere auch aus unterschiedlichen Materialien aufgebaute und zusammengesetzte und auch unterschiedliche Materialien umfassende Filme herzustellen, und dies auch bei unterschiedlich aufgebauten Folienherstellungsanlagen (also bzgl. aller Flachfilm-Herstellverfahren sowie Herstellverfahren zu Cast-, Blas- und/oder sogenannter Double-Bubble oder Tri-Bubble-Verfahren oder dergleichen).

Dabei wird die Steuerung gegenüber herkömmlichen Maschinensteuerungen deutlich vereinfacht. Es ist im Rahmen der Erfindung möglich geworden, die Komplexität der gesamten Steuerung sowie des Steuerungsverfahrens zu vereinfachen. Die bei bisherigen Steuerungsverfahren zu berücksichtigenden Maschinengrößen (in der Regel liegen deutlich mehr als 1000 Maschinengrößen vor) können im Rahmen der Erfindung auf eine sehr viel niedrigere Anzahl von Prozessgrößen verringert werden, beispielsweise derart, dass die Zahl der zu steuernden bzw. zu beeinflussenden Prozessgrößen zwischen 10 bis 100 liegt, also somit mindestens um einen Faktor 10 kleiner ist als die bisher zu berücksichtigende Anzahl von Maschinengrößen.

Dabei ist es im Rahmen der Erfindung auch möglich, das vorhandene Können und Wissen von dem Bedienungspersonal sowie von den Verfahrensingenieuren mittels technischer Mittel nachzubilden und zu erweitern und dies bei konstant hoher Produktqualität und hoher Effizienz des Produktionsverfahrens.

Die erfindungsgemäße Anlagensteuerung, d.h. die erfindungsgemäße Steuerungsvorrichtung oder Steuerungseinrichtung zeichnet sich dadurch aus, dass die gesamte Steuerung in zwei miteinander verkoppelte Gruppen gegliedert wird, die als Module bezeichnet werden und die auch hardwaremäßig voneinander separiert sind oder separierbar sind.

Es handelt es sich dabei um eine sogenannte Sensorgruppe, welche nachfolgend auch als Sensormodul SM bezeichnet wird.

Die damit zusammenwirkende weitere Gruppe betrifft die sogenannte Prozessgruppe, die nachfolgend auch als Prozessmodul PM bezeichnet wird.

Das Sensormodul beinhaltet dabei ein Sensormodell, welches bevorzugt mittels einer Inline-Messtechnik, also einer Ist-Messtechnik hinsichtlich einer Vielzahl von Maschinengrößen während des laufenden Betriebs, diese Maschinengrößen erfasst und dem Sensormodul, d.h. dem sogenannten Sensormodell zur Verfügung stellt bzw. dadurch verarbeitet wird.

Die Maschinengrößen umfassen dabei den gesamten Produktionsprozess einer Materialbahn insbesondere in Form eines Kunststoff-Folienfilms, wozu Daten bezüglich des Rohstoffs, der Extrusion des zähflüssigen Rohrstoffs aus der Düse (insbesondere Breitschlitzdüse), des sogenannten Schmelz- oder Cast-Films, der Walzentemperatur (Oberflächentemperatur) der Kühlrolle, der Wasserbadtemperatur, der Antriebsgeschwindigkeiten der diversen Walzen beispielsweise zur Erzeugung einer Längsreckung, der Antriebsgeschwindigkeiten der umlaufenden Kluppen zur Fortbewegung des Kunststoff-Films, der Oberflächentemperaturen der diversen verwendeten Walzen, sowie der Temperaturdaten über zusätzlich vorgesehene Aufheiz- und/oder Kühleinrichtungen, Lüftergeschwindigkeiten etc. sowie Daten bezüglich der Abzugsrollen (Pull Roll) wie aber auch der Wicklereinrichtung bzw. in Form der Wicklerrolle benötigt werden, die allesamt zu den Maschinengrößen gehören.

Diese hinsichtlich jeder der erwähnten Daten eine Vielzahl von Einzeldaten umfassenden Maschinengrößen können in dem Sensormodell anlagenbedingt so verarbeitet werden, dass jeweils bestimmte Maschinengrößen bestimmten Produktionsgrößen für die Kunststoff-Folienbahn in ihrem jeweiligen Abschnitt des Herstellungsprozesses entsprechen.

Mit anderen Worten stehen die Produktionsgrößen wie beispielsweise das Ausgangsmaterial für die Kunststoff-Folienbahnherstellung, die Temperatur während der verschiedenen Bearbeitungsschritte der Kunststoff-Folienbahn, die Längsreckverhältnisse, die Querreckverhältnisse, die Erzeugung einer Nachbehandlung beispielsweise unter der in Längs- bzw. Querrichtung gereckten Folie unter Erzeugung einer gewissen Bahnspannung und unter Aufbau von gewissen in Längsrichtung auf die Materialbahn einwirkenden Zugkräften in einer Beziehung zu jenen Produktionsgrößen, die anlagenabhängig mit spezifischen anlagenbestimmten Maschinengrößen korreliert werden können.

Ausgehend von den vorstehend genannten Produktionsgrößen können dann in dem auf dem Sensormodul oder Sensormodell aufgesetzten Prozessmodul oder Prozessmodell die gewünschten Prozessgrößen in den jeweiligen Herstellabschnitt der Folienherstellungsanlage eingestellt werden, die über das Prozessmodul in Form des sogenannten Prozessmodells wiederum mit den erwähnten Prozessgrößen wie beispielsweise Ausgangsmaterial, Temperatur, Längs- und/oder Querreckverhältnisse, Bahnquerspannung, Zugkräfte in Längsrichtung etc. durch eine bestimmte Übertragungsfunktion in Korrelation stehen.

Mit anderen Worten sind also die oben erwähnten Maschinengrößen letztlich eine Funktion der Produktionsgrößen, und umgekehrt die Produktionsgrößen eine Funktion der Maschinengrößen.

Ebenso sind die Prozessgrößen bezüglich dieses Kunststoff-Folienfilms eine Funktion der Produktionsgrößen, und umgekehrt stehen die Produktionsgrößen in einem funktionellen Zusammenhang mit den Prozessgrößen.

Erfindungsgemäß müssen beispielsweise während der Herstellungsphase eines Kunststoff-Folienfilms, der in Längs- und/oder Querrichtung gereckt wird, nur noch die Produktionsgrößen hinsichtlich der einzelnen Herstellstufen entsprechend eingestellt werden, also beispielsweise die Dicke einer Folie in einem ganz bestimmten Herstellschritt, der erzeugte Schrumpf, das E-Modul, die Klarheit des Films oder die Trübheit des Film (Haze) etc., die zur einer bestimmten Produkteigenschaft des endgültig hergestellten Kunststoff-Folienfilms führen.

Ebenso können aus den Produkteigenschaften eines Endprodukts in Form eines gereckten Kunststoff-Films die zur Erzielung dieser Eigenschaften erforderlichen Produktionsgrößen bestimmt werden, d.h. auf bestimmte Produkteigenschaften des Films in den dem Endprodukt vorausgehenden Einzelschritten, also zum Zeitpunkt der Cast-Filmerzeugung, der Abkühlung bzw. Erhitzung des Films, einer durchgeführten Längsreckung und einer darauf folgenden Querreckung sowie einer Nachbehandlung etc. eingestellt werden.

Aus den Erläuterungen ergibt sich also, dass der erfindungsgemäße Aufbau bzw. die erfindungsgemäße Struktur zweistufig oder zumindest zweistufig ist, nämlich unter Verwendung eines sogenannten Sensormodells und eines darauf aufgesetzten Prozessmodells. Wie sich später aus der Detailerläuterung noch ergibt, kann darüber eine sogenannte "Produktvisualisierung" sowie beispielsweise "Assistenzsysteme" mit vorgesehen sein. Durch diesen gegenüber dem Stand der Technik völlig anderen strukturellen Aufbau ergibt sich also eine andere Art der Ermittlung und Verarbeitung von Daten und eine völlig neue Art der Steuerung einer entsprechenden Maschine und Anlage.

Ferner wird angemerkt, dass der Stand der Technik im Gegensatz zur vorliegenden erfindungsgemäßen Steuerungsvorrichtung und zugehörigem Verfahren lediglich Mechanismen beschreibt, die nicht Steuerungen sondern Regelungen betreffen.

So beschreibt die EP 0 505 960 A1 eine Vorrichtung und ein Verfahren zur Regelung des Dickenprofils einer extrudierten Folie, wobei der einstufige Regelungsprozess auf Stellglieder einwirkt, um das Dickenprofil zu ändern.

Aus der CN 201195393 Y ist eine Vorrichtung zur Regelung einer Düsenaustrittstemperatur an einer Kunststofffolienblasmaschine als bekannt zu entnehmen. Da im Herstellungsprozess eine Änderung der Dicke der Filmblase entstehen kann, wird eine Vorrichtung vorgeschlagen, um die Temperatur in Echtzeit zu korrigieren.

Gemäß der DE 10 2013 007 669 A1 wird ebenfalls ein Verfahren zur Regelung des Dickenprofils von inline gereckten Folien im Blasverfahren beschrieben, wobei das Dickenprofil der Folie so geregelt wird, dass durch das Recken eine Folie mit einer gezielten Aufdickung in ihrem Randbereich bezogen auf die mittlere Foliendicke über die gesamte Folienbreite ohne Randbereich entsteht.

Ein entsprechendes weiteres Regelverfahren ist aus der US 2009/0243133 A1 als bekannt zu entnehmen. Die beschriebene Vorrichtung ermöglicht es, die Hitzeverteilung in dem herzustellenden Kunststofffilm so einzustellen, dass die Hitzeverteilung in Abhängigkeit der gemessenen Hitze geregelt wird.

Schließlich beschreibt auch die CN 105437493 A kein Steuerungs- sondern lediglich ein Regelungsverfahren, welches ein Produktionssystem zum Plastifizieren von Materialien betrifft. Vorgesehen ist eine Vielzahl von Temperatursensoren, mit denen die Temperatur der gekühlten Kunststoffprodukte an einer bestimmten Position des Zylinders gemessen werden kann. Über die gemessene Temperatur kann eine entsprechende Regelung auf einen optimierten Wert vorgenommen werden.

Die Erfindung wird nachfolgend anhand von Zeichnungen im Einzelnen näher erläutert. Dabei zeigen im Einzelnen:
- Figur 1:: ein schematischer Grundaufbau einer Foli-enherstellungsanlage,
- Figur 2:: eine erste schematische strukturelle Grunddarstellung der erfindungsgemäßen Lösung unter Verwendung eines Sensormo-duls/implementierten Sensormodell und darauf aufgebauten Prozessmoduls mit implementierten Prozessmodell;
- Figur 3:: eine erfindungsgemäße Prinzipdarstellung im größeren Detail;
- Figur 4:: eine Darstellung zur Erläuterung einer Prozessvisualisierung für eine Längsreckanlage;
- Figur 5:: eine erste Zeichnung zur Verdeutlichung eines Optimierungsvorganges bezüglich einer Wasserbad-Temperatur und einer Kühlwalzenoberflächen-Temperatur;
- Figur 6:: eine vergleichbare Darstellung zu Figur 5 zur Verdeutlichung des Optimierungsprozesses;
- Figuren 7-9:: Darstellung eines beispielhaften Flussdiagramms für Optimierungsalgorithmen;
- Figur 10:: eine schematische Grunddarstellung der nach dem Stand der Technik bekannten Maschinensteuerung; und
- Figur 11:: ein schematischer Ausschnitt einer visualisierten Maschinensteuerung nach dem Stand der Technik.

Die Herstellung von Folien im Flachfolienverfahren erfolgt durch monoaxiale, uniaxiale, simultane biaxial oder sequentiell biaxiale Verstreckung, wie dies schematisch anhand von Figur 1 gezeigt ist.

Aus Kunststoff bestehender Rohstoff wird z.B. in Silos 1 gelagert und der Extrusion zugeführt. Bei sog. Direct-Cast-Anlagen wird das Polymer direkt der Breitschlitzdüse zugeführt. Grundsätzlich können verschiedene Additive und Funktionsmaterialien dem Schmelzestrom bzw. Granulat hinzugefügt werden. Eine in einem Extruder 3 homogenisierte Polymerschmelze wird über eine Breitschlitzdüse auf eine Folienabzugsmaschine 9 mit einer Kühlwalze (Chill-Roll) extrudiert.

Bei einer sequentiell-biaxialen Verstreckung wird nach der Kühlwalze 9 der annähernd amorphe Vorfilm (das gilt z.B. für PET) oder der kristalline Vorfilm (z.B. bei PP) über temperierte Walzen geführt und erneut auf eine Recktemperatur wenige Grad Celsius oberhalb der Glasübergangstemperatur erwärmt.

Bei der monoaxialen und der uniaxialen Verstreckung handelt es sich um die Verstreckung in nur eine Richtung. Der Unterschied zwischen den beiden Reckmodi besteht darin, dass bei der monoaxialen Verstreckung die Ränder frei sind und damit vergleichbar zur Verstreckung von Polymerfäden die freie Einschnürung der Folienränder zugelassen wird, während die seitliche Fixierung der Folienränder bei der uniaxialen Verstreckung die Einschnürung verhindert.

Bei der Verstreckung über Reckwalzen 11 mit unterschiedlichen Umfangsgeschwindigkeiten erreicht man auf Grund der Reibkraft zwischen der Walzenoberfläche und der Folienoberfläche einer zu behandelnden Folienbahn, die nachfolgend teilweise auch nur kurz als Folie oder Film bezeichnet wird, eine annähernd uniaxiale Orientierung bei nur geringer seitlicher Einschnürung der Folie. Zwischen der Längs- und Querreckung bzw. vor der simultanen Reckung kann eine optionale Oberflächenbehandlung 15, wie etwa eine Beschichtung, stattfinden. Genauso kann die Endfolie vor oder nach der Wicklung eine derartige Behandlung erfahren.

Bei der sequentiell biaxialen und simultan biaxialen Verstreckung 17 handelt es sich um die Verstreckung einer Folie in zwei Richtungen, die nacheinander (sequentiell) oder gleichzeitig (simultan) erfolgen kann. Die Verstreckung in Längsrichtung erfolgt zwischen zwei mit unterschiedlichen Umfangsgeschwindigkeiten laufenden Reckwalzen. In neueren, schnelllaufenden Folienherstellungsanlagen wird die Längsreckung der Vorfolie in zwei Stufen durchgeführt. Im sequentiellen Reckprozess erfolgt anschließend an die Längsreckung in einem Reckofen die Verstreckung senkrecht zur Folienlaufrichtung.

Beim simultan biaxialen Reckverfahren wird der extrudierte, abgekühlte Vorfilm im unverstreckten Zustand in den Reckofen geführt und anschließend verstreckt. Vor und nach der Reckung kann die Folie einer Zusatzbehandlung, wie z.B. einer Oberflächenbehandlung, unterzogen werden. Nach der Abzugsanlage (pull roll) 19 wird die Endfolie auf Rollen gewickelt.

Das erfindungsgemäße Verfahren kann aber ebenso auf bzw. für Cast-Film-Anlagen verwendet werden. Von daher kann auch bei derartigen Anlagen das nachfolgend noch erläuterte erfindungsgemäße Steuerungsverfahren mit der zugehörigen Steuerungsvorrichtung eingesetzt werden.

Das erläuterte erfindungsgemäße Steuerungsverfahren ist dabei - wie bereits mehrfach erwähnt - nicht nur für die Flachfolienherstellung allgemein einschließlich unter Verwendung der unterschiedlichen bekannten Reckanlagen geeignet, sondern kann auch bei der Herstellung von Blasfolien oder Folien verwendet werden, die nach dem Double-Bubble- oder Tri-Bubble- oder damit vergleichbaren oder ähnlichen Verfahren hergestellt werden.

Die entsprechenden Anlagenkomponenten derartiger Filmherstellungsanlagen sind dem Fachmann geläufig. Es wird insoweit auf vorbekannte Anlagen verwiesen.

### Erfindungsgemäße Steuerungsvorrichtung

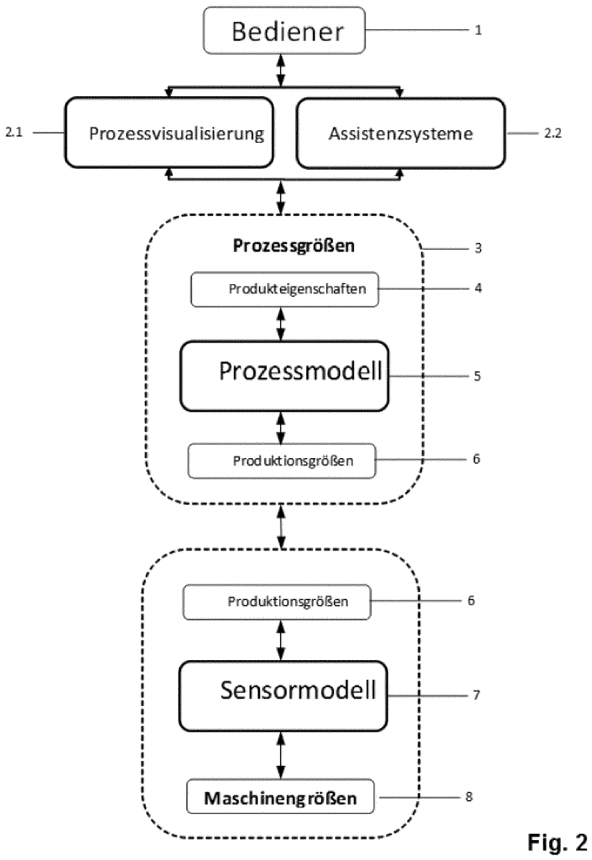

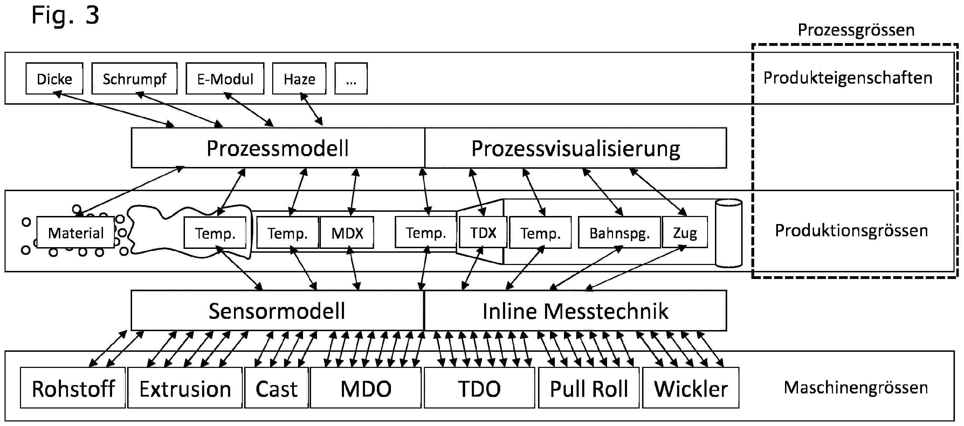

Anhand von Figur 2 und 3 soll nachfolgend der Grundaufbau der erfindungsgemäßen Steuerungsvorrichtung bzw. des erfindungsgemäßen Verfahrens zur Herstellung einer Kunststoff-Folienbahn erläutert werden.

Bevor auf die erfindungsgemäße Lösung eingegangen wird, sollen zunächst folgende Begriffsdefinitionen durchgeführt werden:

### Verfahrensingenieur/Bediener bzw. Bedienerpersonal

Der Bediener stellt eine physische Person dar die die Ausgaben der Maschine interpretiert und die notwendigen Eingaben tätigt, mit dem Ziel ein Produkt zu erstellen.

### Prozessvisualisierung

Die Prozessvisualisierung stellt eine Bedienoberfläche dar, über die ein Bediener überwiegend Prozessgrößen sehen und ändern kann.

### Maschinenvisualisierung

Die Maschinenvisualisierung stellt eine Bedienoberfläche dar über die der Bediener überwiegend Maschinengrößen sehen und ändern kann.

### Assistenzsystem

Ein Assistenzsystem führt den Bediener bei der Erledigung von bestimmten Aufgaben. Die im Assistenzsystem hinterlegte Reihenfolge von Aktionen soll helfen die Bedienung einfacher, sicherer und effizienter zu machen.

### Prozessgröße

Prozessgrößen stellen Eigenschaften des zu verarbeitenden Materials über den gesamten Produktionsprozess dar. Typische Größen sind Folientemperatur, Folienzug, Foliendicke etc. Prozessgrößen umfassen die Produkteigenschaften.

### Produkteigenschaften

Die Produkteigenschaft ist eine Prozessgröße die das Endprodukt beschreibt z.B. Foliendicke.

### Produktionsgröße

Die Produktionsgröße ist eine Prozessgröße die den Produktionsprozess in allen Produktionsstufen beschreibt, z.B. Folientemperatur und Folienzug.

### Prozessmodell/Prozessmodul

Das Prozessmodell stellt qualitativ und quantitativ die Verbindung zwischen Produktionsgrößen und Produkteigenschaft her. Das Prozessmodell wirkt bidirektional d.h. aus Produktionsgrößen kann auf Produkteigenschaften geschlossen werden und umgekehrt. Das Prozessmodell kann dabei in einem Prozessmodul implementiert sein.

### Sensormodell/Sensormodul

Das Sensormodell stellt qualitativ und quantitativ die Verbindung zwischen Maschinengrößen und Prozessgrößen her. Das Sensormodell wirkt bidirektional d.h. aus Maschinengrößen kann auf Prozessgrößen geschlossen werden und umgekehrt. Das Sensormodell kann in einem Sensormodul implementiert sein.

### Maschinengröße

Maschinengrößen stellen Eigenschaften der Maschine dar, z.B. Kühlwassertemperatur, Lüfterdrehzahl.

Bereits aus der Erläuterung des nach dem Stand der Technik bekannten Steuerungsverfahrens gemäß Figur 10 ist deutlich geworden, dass letztlich zur Herstellung eines Kunststoff-Folienfilms die Maschine so eingestellt werden muss, dass darüber exakt der Kunststoff-Folienfilm mit den exakt gewünschten Produkteigenschaften erzeugt wird.

Mit anderen Worten muss letztlich immer eine Verbindung zwischen den Maschinengrößen und den Produkteigenschaften so hergestellt werden, dass der gewünschte Kunststoff-Folienfilm mit den möglichst exakt gewünschten Parametern erzeugt werden kann.

Im Gegensatz zu dem bisherigen Aufbau einer entsprechenden Steuerungsvorrichtung gemäß Figur 10 ist nunmehr anhand von Figur 2 und 3 der erfindungsgemäße strukturelle Aufbau einer entsprechenden Steuerungsvorrichtung dargestellt, der durch einen zweistufigen oder zumindest zweistufigen Aufbau gekennzeichnet ist. Die eine Stufe betrifft dabei das Sensormodul oder Sensormodell und die zweite Stufe das sogenannte Prozessmodul oder Prozessmodell. Gemäß Figur 2 dann darüber noch eine Prozessvisualisierungs-Stufe oder ein sogenanntes Assistenzsystem vorgesehen oder implementiert sein, welches die Gesamtbedienung erleichtert. Die zuletzt genannte Prozessvisualisierung und/oder das Assistenzsystem kann als Zusatzeinrichtung gewertet werden, bei Bedarf auch als dritte Stufe, worüber eine Bedienungsperson die gesamte Anlage bedienen kann.

Daraus ist zu ersehen, dass der Gesamtaufbau über ein zweistufiges System erfolgt, welches zum einen das sogenannte Sensormodell umfasst, welches in Form eines Sensormoduls bereitgestellt werden kann.

Die zweite Komponente oder die zweite Stufe des Herstellverfahrens bzw. der Steuerungsvorrichtung betrifft das sogenannte Prozessmodell, welches auch in einem separaten Prozessmodul implementiert sein kann.

### Zweistufiger Aufbau

Aus der Perspektive eines Bedieners betrachtet, möchte dieser durch geschickte Einstellung bestimmter Maschinengrößen erreichen, dass ein bestimmtes Produkt mit bestimmten Produkteigenschaften möglichst effizient hergestellt wird.

Ein Kernaspekt der erfindungsgemäßen Lösung besteht darin, einen sinnvollen Weg zu finden, Maschinengrößen und Produkteigenschaften miteinander in Beziehung zu setzen, sei es um Produkteigenschaften aus bestimmten Maschinengrößen vorherzusagen, aber auch um Maschinengrößen zu finden, mit denen gegebene Produkteigenschaften erreicht werden sollen.

Es hat sich gezeigt, dass es, wenn überhaupt, dann nur sehr eingeschränkt möglich ist, Maschinengrößen und Produkteigenschaften direkt miteinander in Beziehung zu setzen, unter anderem wegen der beachtlich großen Menge an Maschinengrößen und der sich daraus ergebenden Variationen an Einstellmöglichkeiten.

Löst man sich jedoch vom Blick auf die Maschine und betrachtet den zugrunde liegenden Prozess, kann man feststellen, dass viele verschiedene Arten der Maschineneinstellung aus Prozesssicht ähnliche bis gleiche Auswirkungen haben. Hinzu kommt, dass sich der Folienproduktionsprozess als solcher mit wesentlich weniger numerischen Werten charakterisieren lässt als der Betriebs- und Einstellungszustand einer konkreten Maschine.

Führt man diese Betrachtungsweise weiter zeigt sich, dass für die Produkteigenschaften nur der Prozess an sich relevant ist. Entscheidend ist wie die Folie an bestimmten Punkten des Produktionsprozesses beschaffen sein muss (Produktionsgrößen) und nicht, wie diese Beschaffenheit der Folie durch eine konkrete Maschine erreicht wird.
- Daraus ergibt sich die Möglichkeit, den übergeordneten Zusammenhang zwischen Maschinengrößen und Produkteigenschaften logisch zu strukturieren in einem Zusammenhang zwischen Produkteigenschaften und den Produktionsgrößen.
- Daraus ergibt sich ferner die Möglichkeit, einen Zusammenhang zwischen Maschinengrößen und Produktionsgrößen herzustellen.

In der Praxis ist diese Trennung nicht absolut vollständig sinnvoll. So ist es, wie eingangs erwähnt, zwar schwierig aber nicht völlig unmöglich, stellenweise eben doch Maschinengrößen und Produkteigenschaften miteinander in Beziehung zu setzen. Aus diesem Grund ist es zweckmäßiger den zweiten Zusammenhang als einen zwischen Maschinengrößen und Prozessgrößen zu formulieren, jedoch mit deutlichem Fokus auf Produktionsgrößen als Untermenge der Prozessgrößen.

Die erfindungsgemäße Lösung beinhaltet eine derartige logische Strukturierung in Form
- eines Prozessmodells als Zusammenhang zwischen Produkteigenschaften und Produktionsgrößen
- eines Sensormodells als Zusammenhang zwischen Maschinengrößen und Prozessgrößen mit Fokus auf Produktionsgrößen

Dadurch ergibt sich die oben genannte Zweistufigkeit des Systems.

### Prozessmodell

Die Stufe des Prozessmodells setzt die Produkteigenschaften mit den Produktionsgrößen in Beziehung: Durch bestimmte Produktionsgrößen lassen sich bestimmte Produkteigenschaften erzielen. Auf dieser Ebene sind die Maschinengrößen irrelevant, das Prozessmodell muss sie nicht kennen um seine Funktion zu erfüllen. Sämtliche Prozessgrößen sind unabhängig von einer konkreten Maschine, sie beschreiben lediglich den Prozess, der auf dieser Maschine läuft.

### Sensormodell

Die Stufe des Sensormodells setzt die Prozessgrößen, also sowohl die Produkteigenschaften als auch die Produktionsgrößen, mit den Maschinengrößen in Beziehung: Durch bestimmte Maschinengrößen lassen sich bestimmte Prozessgrößen erzielen. Der Schwerpunkt liegt dabei auf einer Verknüpfung von Produktionsgrößen mit Maschinengrößen.

Beide Stufen arbeiten bidirektional: Produkteigenschaften lassen sich aus Produktionsgrößen ableiten und umgekehrt. Prozessgrößen, also sowohl Produkteigenschaften als auch Produktionsgrößen, lassen sich aus Maschinengrößen ableiten und umgekehrt.

Die Ableitung von Produkteigenschaften aus Maschinengrößen wird durch diesen zweistufigen Aufbau erheblich erleichtert oder stellenweise erst ermöglicht.

Für die Implementierung der beiden Stufen können beliebige Verfahren verwendet werden, beispielsweise Machine Learning Algorithmen, Modellrechnungen, Optimierungsverfahren, Datenbanken, Zuordnungen (beispielsweise auch in Form einer Look-Up-Tabelle etc.), einfache Operationen oder auch Optimierungsalgorithmen und zukünftige Verfahren.

### Vorteile der erfindungsgemäßen Lösung

Die Vorteile der erfindungsgemäßen Lösung sind beachtlich und überraschend.

Denn durch den zweistufigen Aufbau der Steuerungsvorrichtung unter Verwendung eines maschinenabhängigen Sensormodells und eines produktabhängigen Prozessmodells lässt sich eine Vielzahl von Einstellschritten drastisch vereinfachen, um die Herstellung von bestimmten Kunststoff-Folienfilmen auf andere Anlagen unter Verwendung anderer Maschinengrößen einfacher übertragen zu können, neue Produktentwicklungen schneller und effizienter durchführen zu können, ebenso wie auch Produktwechsel schneller einrichten zu können.

Dabei sollen die technischen Merkmale der erfindungsgemäßen Lösung und die erzielbaren Vorteile anhand der nachfolgenden Ausführungsbeispiele näher erläutert werden:

### Prozessvisualisierung

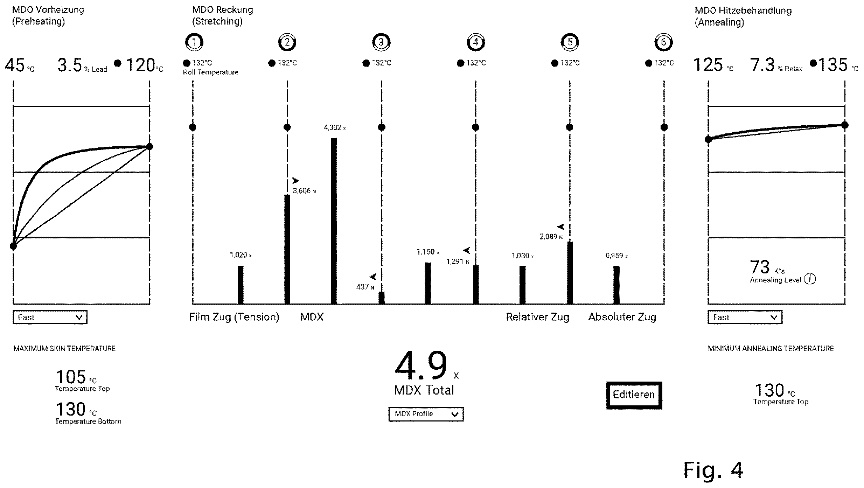

Wie bereits erläutert wurde, wird im Rahmen der vorliegenden Erfindung die nach dem Stand der Technik bekannte und anhand der Figuren 10 und 11 erläuterte Maschinenvisualisierung durch eine erfindungsgemäße Prozessvisualisierung ersetzt. Ein Beispiel eines Ausschnitts einer Prozessvisualisierung wird anhand von Figur 4 erläutert.

Anhand von Figur 4 ist ausschnittsweise angedeutet, wie von einer Bedienungsperson P über eine indirekte Einstellung der Filmtemperatur eine Veränderung der Lüftergeschwindigkeit und eine Veränderung der Zonentemperatur (in den einzelnen Reckzonen) eingestellt werden kann.

Dabei sind anhand von Figur 4 beispielsweise sechs Längsreckstufen visualisiert dargestellt (beispielsweise auf einem LCD-Display, wobei insoweit im Vergleich hierzu auf die anhand von Figur 11 für die Längsreckstufe MDO gezeigte Maschinenvisualisierung verwiesen wird), wobei jeweils die Filmspannung als erster Balken eines Balkendiagramms und daneben die Längsreckkräfte als zweiter Balken dargestellt sind.

Für jede Reckstufe ist oben die zugehörige Walzentemperatur visualisiert wiedergegeben.

Links von den in der Mitte dargestellten Längsreckstufen, den auf die Filmbahn einwirkenden Filmspannungen und Längskräften ist eine Vorheizstufe visualisiert wiedergegeben und zwar bezüglich der Längsreckeinheit.

Die Eintrittstemperatur des Films in dieser Vorheizstufe ist mit 45°C angegeben. Die Ausgangstemperatur soll 120°C betragen. Die maximale Folienoberflächentemperatur beträgt 105°C an der Oberseite und 130°C an der Unterseite. Mit 3,5% ist die Geschwindigkeitsdifferenz zur vorherigen Maschine angegeben.

Im Falle einer vorstehend erwähnten indirekten Einstellung wird von der Bedienungsperson die Filmtemperatur über die Walzentemperaturen eingestellt.

Im Falle einer direkten Einstellung würde die Bedienungsperson direkt die Filmtemperatur ändern, während eine integrierte Logik die Umsetzung übernimmt.

Dadurch findet also eine Reduzierung der Anzahl m (wobei die Anzahl m bei der Maschinensteuerung gemäß dem Stand der Technik einen Wert von weit über 1000 Parametern üblicherweise aufweist) statt, so dass letztlich nur noch 10 bis 100 (auf S. 8, Zeile 22 wird die untere Grenze mit 10 angegeben) Größen eingestellt werden müssen, also beispielsweise um 50 Einstellparameter vorhanden sind.

Ein derartiger Aufbau ermöglicht beispielsweise auch die Implementierung von sogenannten Assistenten.

Möchte also eine Bedienungsperson bestimmte Prozessgrößen für den zu produzierenden Kunststoff-Folienfilm verändern, können über ein software-gesteuertes Assistentenprogramm Vorschläge unterbreitet werden, wie welche Parameter am besten verändert werden, um ein gewünschte Ziel zu erreichen.

Dies ist nur deshalb möglich, weil das gesamte Steuerungsverfahren - wie erläutert - mit dem maschinenabhängigen Sensormodell und dem darauf aufbauenden produktabhängigen Prozessmodell zweistufig aufgebaut ist und damit bei der Prozesssteuerung selbst keine Überlegungen hinsichtlich des Sensormodells angestellt werden müssen. Denn diese maschinenabhängigen Daten sind quasi als "Unterbau" im zweistufigen Modell hinterlegt und werden durch die bidirektionale Zuordnung der Prozessgrößen und der Maschinengrößen entsprechend automatisch eingestellt.

Dabei wird schon an dieser Stelle auch angemerkt, dass die Übertragungsfunktionen, d.h. die Verhältnisse zwischen Maschinengrößen und Produktionsgrößen des Sensormodells aufgrund von mathematischen Formeln und/oder Beziehungen hinterlegt sein können, oder im einfachsten Fall auch in Form von Look-Up-Tabellen, die bestimmte Maschinengrößen zu bestimmten Prozessgrößen in Verbindung setzen.

Die gesamte komplexe Logik der Umsetzung von Maschinengrößen auf Prozessgrößen und letztendlich Produkteigenschaften wird von Modellen (Sensormodell und Produktionsmodell) übernommen und bleibt für den Bediener verborgen.

Dabei sind die Verhältnisse zwischen Maschinengrößen und Prozessgrößen in einer bevorzugten Ausführungsform der Erfindung - worauf nachfolgend eingegangen wird - für einzelne Segmente des Herstellverfahrens getrennt hinterlegt, da der herzustellende bzw. zu bearbeitende Kunststoff-Folienfilm in den einzelnen Stufen oder Segmenten (Abgeben des Cast-Films auf die Kühlwalze, Wärmevorbehandlung, Längsreckung, Querreckung, Nachbehandlung etc.) unterschiedliche Temperaturverläufe, unterschiedliche Dickenprofile und eine unterschiedliche Trübheit mit unterschiedlichem Trübungsgrad (Haze) aufweist und dabei in den einzelnen Segmenten je nach der spezifischen Produktions- und/oder Behandlungsstufe auf den Film unterschiedliche Längs- und/oder Querreckkräfte einwirken bzw. einwirken sollen.

### Übertragbarkeit der Anlageneinstellung und/oder Vergleichbarkeit der Einstellung bei zwei verschiedenen Folienherstellungsanlagen

Wird beispielsweise ein bestimmter Kunststoff-Folienfilm unter Verwendung von bestimmten Ausgangsmaterialien und bestimmten unterschiedlichen Filmschichten etc. auf einer kleineren Anlage, beispielsweise einer Laboranlage, getestet und soll nun auf einer großen Produktionsanlage hergestellt werden, so hätten bisher nach dem Stand der Technik auf der großen Anlage alle Einstellwerte und damit alle Maschinengrößen mittels der Maschinenvisualisierung erneut eingestellt werden müssen, bis aufgrund aufwendiger Einstell-Iterationsschritte letztlich der Kunststoff-Film genau mit den Produkteigenschaften hergestellt wird, mit denen er hergestellt werden soll.

Im Rahmen der erfindungsgemäßen zweistufigen Steuerungsvorrichtung bzw. des zweistufigen Steuerungs- und/oder Herstellverfahrens erfolgt nunmehr bei der Umstellung der Produktion von einer kleineren auf eine größere Anlage ein Abgleich der nunmehr völlig anderen Maschinengrößen nicht über eine Maschineneinstellung (um diese Maschineneinstellung muss sich das Bedienungspersonal keine Gedanken mehr machen), sondern nur noch über das sogenannte Prozessmodell.

Das bedeutet, es werden an dem Prozessmodell wiederum die Filmeigenschaften über die verschiedenen Stufen oder Segmente, also Einzelschritte des Herstellprozesses so eingestellt, dass darüber der endgültig hergestellte Film die gewünschten Produkteigenschaften aufweist.

In Anhängigkeit davon ordnet das Prozessmodell den einzelnen Herstellphasen die entsprechenden Produktionsgrößen zu (korreliert die entsprechenden Produktionsgrößen), die dann wiederum über das Sensormodell anlagenabhängig in Korrelation mit Maschinengrößen stehen, die entsprechend automatisch eingestellt werden.

Bereits die Übertragung von Produktionsbedingungen (Einstellung) zwischen gleichartigen Anlagen gestaltet sich gemäß dem Stand der Technik bisher als sehr schwierig, da es oft zumindest kleine, aber durchaus bedeutsame Abweichungen von Anlage zu Anlage gibt. Je stärker die Abweichungen sind, desto problematischer war bisher die Übertragbarkeit von auf einer Anlage mit als optimal empfundenen eingestellten Maschinenwerten auf eine andere an sich gleichartige Anlage.

Die erfindungsgemäße Anlage oder Steuerungseinrichtung stellt durch das Sensormodell abgeleitete Produktionsgrößen wie beispielsweise die Folientemperatur oder den Folienzug zur Verfügung, die also von Maschinengrößen abgeleitet und/der davon abstrahiert sind. Diese maschinenbedingten bzw. maschinenabhängigen, aber von den Maschinengrößen abstrahierten prozessrelevanten Größen (Produktionsgrößen) können dann direkt auf eine beliebige andere Anlage übernommen werden, die den gleichen Prozess fährt, mit der eine gleiche Folie mit gleichen Produktionseigenschaften hergestellt werden soll. Auf dieser anderen Anlage müssen dann nur entsprechend dem dort verwendeten Prozessmodell die Produkteigenschaften des endgültig hergestellten Films und damit die Prozessgrößen eingestellt werden, um darüber über das bidirektional wirkende Prozessmodell und das als Unterstufe davon abhängige Sensormodell letztlich die exakte Maschineneinstellung vorzunehmen.

Sind mehrere Anlagen des gleichen Rohstofftyps mit dem erfindungsgemäßen System ausgestattet, kann die Übertragung von Einstellungen zwischen diesen Anlagen deutlich vereinfacht werden.

### Schnelle und effiziente Produktentwicklung

Soll z.B. auf einer bereits installierten Folienherstellungsanlage eine Kunststoff-Folie mit bestimmten Produkteigenschaften hergestellt werden, so erfordert dies nach dem Stand der Technik bisher eine Vielzahl Einstellungen von vorwiegend mechatronischen Komponenten.

Bei der erläuterten erfindungsgemäßen Steuerungsvorrichtung wird dies durch die direkte Einstellung der endgültigen Produkteigenschaften des fertigproduzierten Kunststoff-Folienfilms erzielt. Die davon abhängigen Einstellwerte beispielsweise für die mechatronischen Komponenten der Anlage selbst erfolgen dann automatisch systemgestützt, nämlich durch das hinterlegte zweistufige Einstellmodell mit einem produktabhängigen Prozessmodul als eine Stufe und dem maschinenabhängigen Sensormodul als zweite Stufe, wobei das Prozessmodell wiederum mit der hinterlegten Überragungsfunktion oder Relation die Produktionsgrößen wie beispielsweise Folientemperatur, Folienspannung, Längs- und Querreckkräfte mit den Prozessgrößen des herzustellenden Kunststoff-Folienfilms korreliert, also beispielsweise die Dicke des Films, der Schrumpf des Films, den E-Modul, die Trübung des Films (Haze) etc.. Dabei korrelieren diese Prozessgrößen in den einzelnen Herstellstufen des Kunststoff-Folienfilms wiederum mit den endgültigen Produkteigenschaften des abschließend und fertig hergestellten Kunststoff-Folienfilms.

Der erfindungsgemäße zweistufige Aufbau des Steuerungssystems ermöglicht zudem auch, dass das Bedienungspersonal nicht nur sehr schnell und einfach Produkteigenschaften einstellen oder verändern, sondern auch bestimmte prozessrelevante Zwischenergebnisse überprüfen kann, und zwar beispielsweise im Rahmen von "was-wäre-wenn"-Szenarien. Dadurch lassen sich schnell veränderte Endeigenschaften prognostizieren - in Abhängigkeit unterschiedlicher Prozessgrößen.

Durch die Kenntnis der qualitativen und quantitativen Abhängigkeiten zwischen Produkt- und Produktionsgrößen (Produktionsmodell) kann ausgehend von neuen Produktgrößen die Anlage schnell eingestellt werden. Bei den heutigen Ausstößen von über 7,5 t/h sind Neuentwicklungen von Folien erst durch das Anwenden eines Prozessmodells effizient durchführbar.

Ausgehend von festgelegten Produkteigenschaften bestimmt ein Prozessmodell über geeignete Verfahren, wie beispielsweise Machine Learning Algorithmen, die dafür erforderlichen Produktionsgrößen.

Durch diesen Schritt sind alle Prozessgrößen und damit der gesamte Folienproduktionsprozess beschrieben.

Geeignete auf die konkrete Produktionsanlage angepasste Sensormodelle ermitteln nun, welche Maschinengrößen erforderlich sind, um die gegebenen Prozessgrößen zu erreichen. Dies kann im einfachsten Fall lediglich eine Zuordnung sein; beispielsweise entspricht der auf Maschinenebene einstellbare relative Geschwindigkeitsunterschied zwischen zwei Antrieben im MDO-Reckwerk dem MD Reckverhältnis.

Meist sind jedoch umfangreiche Rechnungen in Kombination mit Optimierungsalgorithmen nötig um passende Maschinengrößen zu finden. Diese Maschinengrößen werden dann automatisch in ein bereits bestehendes Anlagen-Steuerungssystem, beispielsweise einer oder mehreren speicherprogrammierbaren Steuerungen, übertragen und auf geeignete Weise effektiv gesetzt. Einstellungen, die nicht automatisch vorgenommen werden können, werden dem Benutzer in angemessener Weise angezeigt, so dass er die Einstellung manuell vornehmen kann.

So werden im Endeffekt alle Komponenten einer Anlage auf die vom System ermittelten Maschinengrößen eingestellt. Da beide Modelle bidirektional arbeiten, können mittels des Sensormodells mindestens die Produktionsgrößen, möglicherweise auch vereinzelte Produkteigenschaften, aus den Maschinengrößen bestimmt werden. Sämtliche nach diesem Schritt noch fehlenden Produkteigenschaften können dann über das Prozessmodell bestimmt werden.

So ist eine Vorhersage von Produkteigenschaften auf Basis der Änderung von Maschinengrößen möglich. Dies gilt nicht nur für Maschineneinstellungen, sondern auch für Messwerte, beispielsweise der Umgebungstemperatur.

### Schneller Produktwechsel

Der Produktwechsel ist ein wiederkehrender Vorgang der auf einer Produktionsanlage alle 10 Stunden bis ca. 2 Tage stattfindet. Bei den immer höheren Ausstößen kann eine effiziente Durchführung des Produktwechsels zwischen Erfolg und Misserfolg eines Unternehmens entscheiden. Mit dem beschriebenen Konzept wird der Produktwechsel einerseits über einen Assistenten geführt, anderseits wird die Maschine über Sensor- und Prozessmodell gezielt eingestellt. Bestimmte Einstellungen sollen bereits ohne Machine Learning realisierbar sein. Eine "intelligente Anlage" kann, gestützt durch geeignete Systeme, den optimalen Betriebspunkt für bestimmte Eigenschaften erreichen. Dabei ist es auch möglich, zu definieren was unter einem optimalen Betriebspunkt zu verstehen ist.

### Besseres Prozessverständnis

Durch die systemgestützte Bestimmung von Produktionsgrößen wird zudem im Rahmen der Erfindung der zugrundeliegende Prozess für das Bedienungspersonal deutlich transparenter als dies bei einer reinen Beurteilung der Maschineneinstellung nach dem Stand der Technik bisher der Fall war.

### Schnellere Ursachenanalyse bei Qualitätsabweichungen

Durch die Reduktion der m-Maschinengrößen auf n-Prozessgrößen (was nur durch den zweistufigen Prozessaufbau unter Verwendung eines Sensormodells mit maschinenabhängigen Maschinengrößen im Rahmen der Erfindung möglich wird) kann die Ursachenanalyse bei abweichenden Produkteigenschaften schneller und gezielter durchgeführt werden.

### Optimierung der Produktion

Es gibt viele Möglichkeiten bestimmte Produkteigenschaften zu erreichen. Die erfindungsgemäße Steuerungsvorrichtung bzw. das erfindungsgemäße Verfahren können, gestützt durch geeignete Systeme, dabei helfen, den optimalen Betriebspunkt für bestimmte Eigenschaften zu erreichen. Dabei ist es auch möglich zu definieren, was unter einem optimalen Betriebspunkt zu verstehen ist.

### Sensormodul und/oder Sensormodell

Nachfolgend soll beispielhaft erläutert werden, wie ein konkretes Sensormodul implementiert sein kann. Anhand der nachfolgenden Erläuterung soll dabei beispielsweise für die "Folien-Temperaturberechnung" verdeutlicht werden, welche Beziehung zwischen Maschinengrößen zum einen und Produktionsgrößen zum anderen bezüglich der erwähnten einzustellenden Folientemperatur besteht.

Für Folienproduktionsanlagen die mit dem Material Polypropylen arbeiten ist es möglich, die Temperatur der Folienbahn an prozesstechnisch wichtigen Positionen innerhalb der Anlage zu berechnen. Dies gilt für sequentielle und simultane Folienherstellungsanlagen.

Die Anlage wird dazu beginnend an der Austrittslippe der Schmelzedüse logisch in Segmente aufgeteilt, und zwar genau auf eine solche Art und Weise, dass in jedem Anlagen-Segment aus Sicht der Folienbahn konstante Rahmenbedingungen herrschen. Dies gilt insbesondere im Hinblick auf
- Wärmeübergangskoeffizienten zwischen Folie und Maschine bzw. Umgebung
- Maschinen- bzw. Umgebungstemperaturen.

Für jedes Anlagen-Segment wird abhängig von der dortigen Anlagengeschwindigkeit die Verweilzeit und die Dicke der Folienbahn berechnet. Als Eingangsgröße stehen weiterhin thermische Materialeigenschaften, der Materialdurchsatz und die Temperatur der Kunstoffschmelze zur Verfügung.

Beginnend am ersten Segment, mit der Schmelzetemperatur als Starttemperatur und Eingangstemperatur für das erste Segment, wird mit einem geeigneten Algorithmus die Temperaturänderung über das Segment berechnet. In diese Rechnung gehen alle soeben genannten Werte ein:
- Wärmeübergangskoeffizienten zwischen Folie und Maschine bzw. Umgebung (physikalische Größe)
- Maschinen- bzw. Umgebungstemperaturen (geregelt oder gemessen)
- Verweilzeit (aus Geschwindigkeit)
- Dicke der Folienbahn (u.a. aus Geschwindigkeit)
- Thermische Materialeigenschaften (Dichte, Wärmekapazität, Wärmeleitfähigkeit)
- Materialdurchsatz (von Materialförderung)
- Eingangstemperatur des Segments (vom vorherigen Segment / Schmelzetemperatur)

Die Folientemperatur am Ende eines jeweiligen Anlagen-Segments wird dem unmittelbar folgenden Segment als Eingangstemperatur übergeben. Durch eine segmentweise Abarbeitung ist so die Berechnung u.a. für prozesstechnisch wichtige Positionen möglich.

Die Berechnung erfolgt entweder nach Binder-Schmitt, FEM Modellen oder Fourier, oder nach anderen geeigneten Methoden.

Prinzipiell könnte die Rechnung ohne Materialdurchsatz erfolgen, durch dessen Angabe lässt sich jedoch auch der Wärmestrom zwischen Folie und Maschine / Umgebung berechnen, so dass sich Aussagen über den Energiebedarf des Prozesses treffen lassen.

Dadurch lässt sich also eine Korrelation zwischen einer einzustellenden Maschinengröße z.B. für die Temperatur und einer tatsächlichen dadurch bedingten Folientemperatur erstellen. Diese Korrelationsbedingungen gelten bidirektional. Wird mit anderen Worten eine bestimmte Folientemperatur eingestellt, so würde darüber auch eine bestimmte Maschinengröße für die Erzeugung dieser Temperatur entsprechend eingeregelt werden. Wird umgekehrt an der Maschinengröße eine Temperatur-Wert-Änderung vorgenommen, so führt dies entsprechend den Korrelationsbedingungen oder der Übertragungsfunktion zu einem abgeänderten Wert bezüglich der Folientemperatur.

Diese Korrelationen oder Übertragungsfunktionen werden aber nicht für den gesamten mehrstufigen Herstellungsprozess einer Kunststoff-Folienbahn eingestellt (aber genauso beispielsweise für den einstufigen Herstellprozess einer Cast-Film-Produktion) sondern Segment abhängig. Wie bereits erwähnt wird die gesamte Folienherstellungsanlage in Folienabzugsrichtung in mehrere Anlagen-Segmente oder Anlagen-Zonen unterteilt, wobei jedes Segment dadurch gekennzeichnet ist, dass dort messbare oder berechenbare Bedingungen herrschen, wie ausgeführt also beispielsweise die gleichen Wärmeübergangskoeffizienten zwischen Folie und Maschine bzw. Umgebung und die gleichen Maschinen- bzw. Umgebungstemperaturen.

Von daher können diese Segmente, die eine Mehrzahl von einzelnen Aufwärmstufen, Ventilatoren, etc. aufweisen können, als einheitlich handhabbare Untereinheiten, eben als Anlagen-Segmente behandelt werden.

Für die aufeinanderfolgenden Segmente, die von den herzustellenden Kunststoff-Folienfilmen nacheinander durchlaufen werden, können dann jeweils die für einen spezifischen Kunststoff-Folienfilm optimierten Folientemperaturwerte errechnet werden, die mit entsprechenden Maschinengrößen in Korrelation stehen.

Neben der reinen Berechnung eines von den Maschinengrößen abgeleiteten und damit abstrahierten Prozesswertes, ist dadurch auch eine deutliche Vereinfachung der Maschineneinstellung insgesamt möglich.

Die Maschineneinstellungen einer Folienvorheizung im Ofen einer Querreck- oder Simultananlage umfassen bei einer üblichen Folienherstellungsanlage ca. 6 bis 8 Lufttemperaturen und ca. 20 bis 30 Ventilatordrehzahlen, deren Einstellung außerdem von der Foliendicke und der Anlagengeschwindigkeit abhängig sind.

Dieselbe Folienvorheizung lässt sich jedoch auch lediglich durch die Endtemperatur der Folie beschreiben, eventuell noch ergänzt durch die Startemperatur und einer einfachen Kurve des Temperaturverlaufs über die Verweilzeit.

Im Hinblick auf das Prozessmodell und evtl. darin verwendeter Machine Learning Algorithmen findet also eine erhebliche Vereinfachung bzw. Dimensionalitätsreduzierung statt. Damit werden maschinenunabhängige Aufgaben erheblich leichter handhabbar.

Anhand weniger Einstellwerte kann ein gesamter Verfahrensschritt bestimmt werden.

Vorstehend ist also erläutert worden, wie quasi in unidirektionaler Richtung aus Maschinengrößen (beispielsweise Einstellwert für eine Temperatur an der Maschine) letztlich in Abhängigkeit der gegebenen anlagenspezifischen Korrelationen bzw. Übertragungsfunktionen bestimmte Temperatur-Prozesswerte erzeugt werden können, und zwar bevorzugt für mehrere aufeinander in Abzugsrichtung der Kunststoff-Folienbahn gegebenen bzw. definierten oder gegliederten Anlagen-Segmente oder Anlagen-Zonen.

Die Korrelation oder Ableitung zwischen Maschinengrößen und Prozessgrößen ist aber nicht unidirektional sondern bidirektional aufgebaut, so dass auch von vorgegebenen Prozessgrößen abhängig entsprechend zugeordnete Maschinengrößen definiert werden können, und dies ebenfalls wiederum bevorzugt für jedes Anlagen-Segment oder jede Anlagen-Zone separat, die von dem Kunststoff-Folienfilm aufeinanderfolgend durchlaufen wird. Dies soll nachfolgend kurz anhand einiger weniger Darstellungen erläutert werden, beispielsweise für die Erzeugung eines Cast-Films.

Bei der Erzeugung eines Cast-Films wird die Schmelze aus einer Breitschlitzdüse (über eine Düsenlippe) auf eine auf einer bestimmten Temperatur befindliche Kühlwalze gegeben. Bei einigen Folientypen kann sich die Kühlwalze in einem Wasserbad befinden. Während der Rotation wird der aus der Breitschlitzdüse abgegebene Cast-Film optional durch das Wasserbad hindurch geführt und nach einem Umschlingungswinkel von mehr als 180° üblicherweise abgehoben und zu einer nachfolgenden Walze geführt.

Sowohl das Wasserbad hat eine bestimmte Temperatur wie aber auch die Oberfläche der Kühlwalze (Chill Roll).

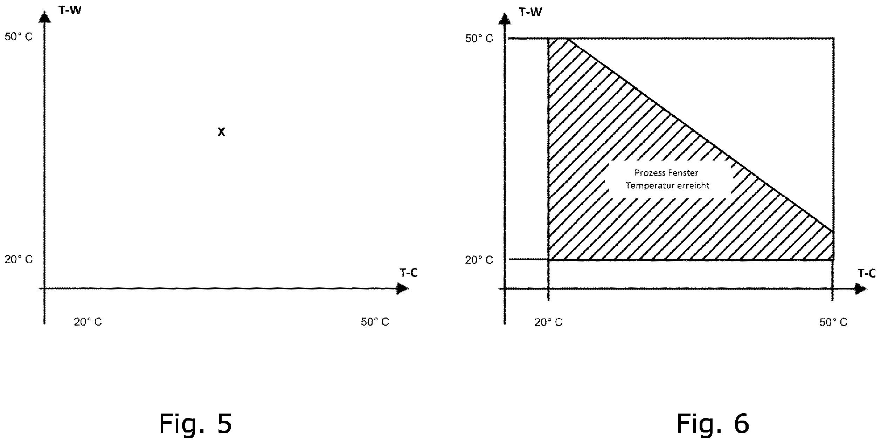

Wie in Figur 5 gezeigt ist, kann die Kühlwalze eine auf der X-Achse angegebene Temperatur T-C und das Wasserbad eine auf der Y-Achse angegebene Wasserbadtemperatur T-W aufweisen. In dieser Figur ist ein Kreuz X eingezeichnet, das eine optimale Temperatur T-X bezüglich der Walzenoberfläche der Kühlwalze und der Temperatur des Wassers wiederspiegeln soll. Im gezeigten Beispiel soll die optimale Oberflächentemperatur der Walze 35°C und die optimale Wassertemperatur 40°C betragen. Letztlich wäre aber jeder Wert denkbar, der zwischen der Unter- und Obergrenze von 20°C bzw. 50°C für die Kühlwalzen-Oberflächen-Temperatur gegeben ist bzw. zwischen 20°C und 50°C für die Wasserbadtemperatur liegt.

In diesem Bereich gibt es aber nunmehr optimale Werte, mit anderen Worten ist nicht jeder Wert gleich gut, die innerhalb des so gebildeten Quadrates oder Rechteckes liegen.

Die Frage lautet nunmehr, wie eventuell der bestmögliche Temperaturbereich für die Oberflächen-Walzen-Temperatur der Kühlwalze und für die Wassertemperatur ermittelt werden kann.

Hierfür sind alle nur denkbaren Verfahren anwendbar, um letztlich von bestimmten Prozessgrößen wie beispielsweise der Cast-Film-Temperatur auf optimierte Maschinengrößen rückschließen zu können.

Eines der durchführbaren Optimierungsverfahren setzt auf einen Optimierungsalgorithmus auf, der nach dem Prinzip eines intelligenten Ausprobierens arbeitet.

Dieser Optimierungsalgorithmus kann auf eine beliebige Funktion aufsetzen und optimale Parameter für diese Funktion bestimmen. Im Falle des Sensormodells für die Folientemperatur setzt er auf die oben genannte Folien-temperaturberechnung auf und ermittelt so optimale Maschineneinstellungen.

Da der Algorithmus letztlich auf jede beliebige Funktion aufsetzen kann, damit also einen universellen Ansatz verfolgt, ist es möglich, eine eigentlich unidirektionale Rechnung zu einem bidirektionalen Modell zu ergänzen. Seine Anwendung ist dabei nicht nur für Sensormodelle, sondern auch für Prozessmodelle grundsätzlich möglich.

Um ein Prinzip des Optimierungsalgorithmus besser verständlich zu machen, wird nachfolgend auf die Figur 6 verwiesen. Im vorstehend erläuterten Beispiel einer optimierten Wasserbadtemperatur und optimierten Walzenoberflächen-Temperatur handelt es sich letztlich um einen zweidimensionalen Raum, wobei sich bei dem vorstehend erläuterten Ausführungsbeispiel anhand von Figur 5 und der entsprechenden Darstellung gemäß Figur 6 ergibt, dass ein Temperaturbereich T-W für das Wasserbad wie ein Temperaturbereich T-C für die Kühlwalze optimaler wäre, der in dem in Figur 6 gezeigten Rechteck (bzw. Quadrat) in dem unterhalb der nach rechts abfallenden Trennlinie liegen würde.

### Beschreibung eines Algorithmus

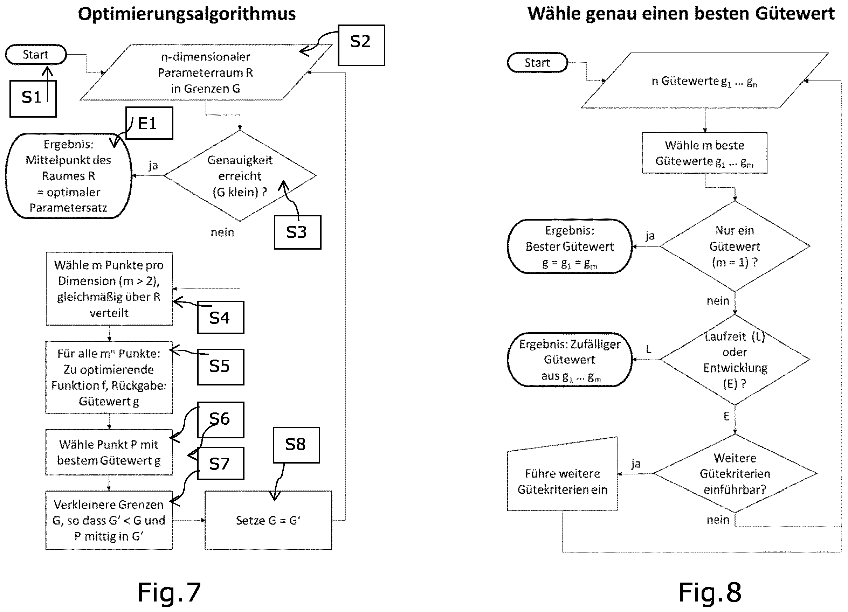

Gemäß des anhand von Figur 7 wiedergegebenen Optimierungsalgorithmus würde nunmehr für einen derartigen zweidimensionalen Parameterraum R ausgegangen werden, und zwar innerhalb der Grenzen G von 20°C bis 50°C einmal für die Walzenoberflächen-Temperatur T-C wie aber auch in diesem Beispiel für die insoweit gleich gewählten Temperaturwerte von 20°C und 50°C für die Wasserbadtemperatur, T-W. Bei dem Optimierungsalgorithmus gemäß Figur 7 ist durch den Begriff "Start" (S1) der Beginn des Algorithmus gekennzeichnet.

In dem erwähnten zweidimensionalen Parameterraum R (n = 2) wird ein Wert gewählt und dann überprüft (S2), ob die erreichte Genauigkeit ausreichend ist, also die Grenzwerte klein genug sind (im gezeigten Ausführungsbeispiel wird davon ausgegangen, dass jeder Temperaturwert zwischen 20°C und 50°C optimal wäre).

Wird nach dem Verfahrensschritt S3 die Genauigkeit als ausreichend bewertet (also der Raum zwischen Ober- und Untergrenze für die beiden Temperaturwerte der Walzenoberfläche zum einen und der Wassertemperatur zum anderen), würde bevorzugt der Mittelpunkt dieses zweidimensionalen Parameterraums R als optimaler Parametersatz E3 herangezogen werden.

Damit stünde das Ergebnis E1 fest.

Würde bei dem Schritt S3 die Genauigkeit als nicht klein genug bewertet werden, würden beispielsweise mehr als zwei Punkte, allgemein m Punkte in dem n dimensionalen Parameterraum R gewählt werden, d.h. im vorliegenden Raum zwei Punkte, die innerhalb des in Figur 6 liegenden zweidimensionalen Raumes liegen würden (S4). Für alle mⁿ Punkte wird eine zu optimierende Funktion f durchgeführt, wobei ein Gütewert g behalten wird (S5).
Es wird der Punkt P als nächstes ausgewählt, der den besten Gütewert g entspricht (S6).

Anschließend werden die Grenzen verringert, also beispielsweise die Untergrenze von 20°C auf 30°C angehoben und die Obergrenze von 50°C auf 40°C erniedrigt etc. und dann in diesem verkleinerten Bereich wiederum einer den optimalen Wert wiederspiegelnden Punkt P festgelegt werden, der mittig zwischen den verringerten Grenzen G' liegt (S7).

Anschließend wird dieser neu gewählte mittige Wert G' der als Ausgangspunkt 4G herangezogen (S8) und die Schleife erneut durchlaufen, wie in der Darstellung gemäß Figur 7 dargestellt ist.

Anhand der Darstellung gemäß 8 wird vereinfacht erläutert, wie genau ein bester Gütewert ermittelt werden kann.

Wesentlich hierbei ist die Unterscheidung zwischen Laufzeit des Systems, d.h. das System ist produktiv im Einsatz, und Entwicklung des Systems, d.h. das System wird beispielsweise im Rahmen der Entwicklung eines Sensormoduls auf eine konkrete Maschine angepasst oder im Rahmen der Entwicklung eines Prozessmoduls auf einen konkreten Prozess angepasst.

Tritt zur Laufzeit der Fall auf, dass der Optimierungsalgorithmus mehrere gleichwertig optimale Gütewerte zurückgibt, wird aus dieser Menge ein Gütewert zufällig ausgewählt.

Tritt dieser Fall zur Entwicklungszeit des Systems auf, müssen so lange weitere Gütekriterien eingeführt werden, bis der Optimierungsalgorithmus genau einen Gütewert zurückgibt.

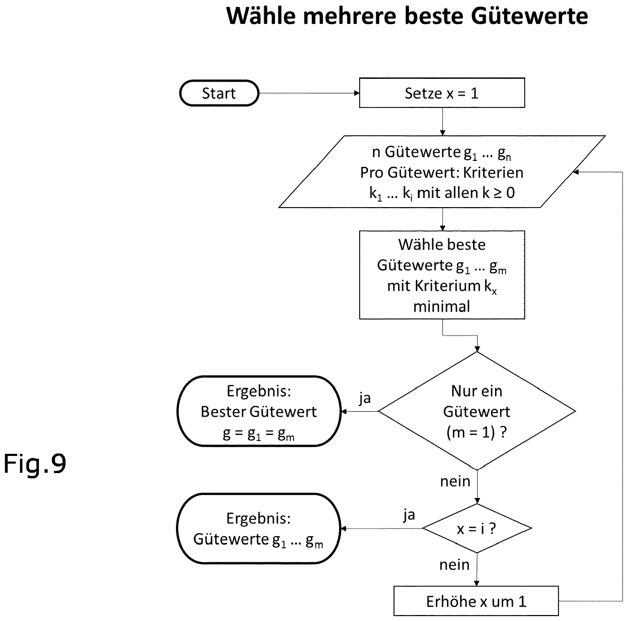

Anhand von der Darstellung gemäß Figur 9 ist ein Beispiel gezeigt, wie mehrere beste Gütewerte ermittelt werden können.

Jeder Gütewert ist hierbei durch i Kriterien k₁ ... kᵢ charakterisiert, wobei diese Kriterien numerische Werte größer oder gleich 0 sind. Je besser ein Gütewert, desto niedriger diese numerischen Werte. Außerdem gilt, je niedriger der Index x eines Kriteriums kₓ, desto höher die Priorität dieses Kriteriums.

Ziel der Ermittlung ist nun, beginnend beim Kriterium mit der höchsten Priorität k₁, die besten Gütewerte g₁ bis gₘ zu ermitteln und diese Menge an Gütewerte durch schrittweise Betrachtung der Kriterien immer niedrigerer Priorität einzugrenzen. Im Idealfall gelingt dadurch die Eingrenzung auf genau einen Gütewert g, jedoch ist es auch möglich dass alle Kriterien betrachtet wurden und immer noch eine Menge an Gütewerten g₁ bis gₘ als optimal zu betrachten sind.

Werden hier nun mehrere Gütewerte zurückgegeben, so muss dieser Fall zur Laufzeit des Systems abgefangen werden bzw. zum Entwicklungszeitpunkt des Systems weitere Kriterien definiert werden (siehe oben).

### Prozessmodul und/oder Prozessmodell

Vorstehend sind Ausführungen zu dem Sensormodul bzw. Sensormodell gemacht worden.

Nachfolgend soll auf das Prozessmodul bzw. Prozessmodell eingegangen werden.

Ein Prozessmodell liefert die Verknüpfung zwischen den Produktionsgrößen einer laufenden oder hypothetischen Produktion und den Produkteigenschaften des durch diese Produktion erzeugten Produkts. Es bildet damit einen wesentlichen Teil eines Produktionsprozesses ab und zwar so, dass eine maschinelle Verarbeitung dieser Abbildung möglich ist, vor allem mit informationstechnischen Systemen.

Das Prozessmodell ist außerdem abstrahiert von einer konkreten Anlage, es kann ohne wesentliche Änderungen auf jede Anlage übertragen werden, deren Sensormodell dieses Prozessmodell unterstützt.

### Bestimmung der Produkteigenschaften

Aus Sicht der Produkteigenschaften trifft das Prozessmodell Aussagen darüber, welche Produkteigenschaften mittels eines bestimmten Prozesses erreicht werden. Anders formuliert heißt dies, dass Aussagen über das "Was" getroffen werden, also was produziert wird.

Beispiel: Das Prozessmodell des Prozesses "biaxiale Verstreckung von Polypropylen-Folie" sagt aus, dass die produzierten Filme eine Zugfestigkeit von 200 MPa in Maschinenrichtung haben werden. Dieser Wert für die Zugfestigkeit kann auch als "MD Tensile Strength" englischsprachig bezeichnet werden.

### Bestimmung der Produktionsgrößen

Aus Sicht der Produktionsgrößen trifft das Prozessmodell Aussagen darüber, welche Produktionsgrößen für einen bestimmten Prozess erforderlich sind und in welcher Bandbreite sie ggf. geändert werden dürfen. Anders formuliert heißt dies, dass Aussagen über das "Wie" getroffen werden, also wie produziert wird.

Beispiel: Das Prozessmodell des Prozesses "biaxiale Verstreckung von Polypropylen-Folie" sagt aus, dass eine Folie um den Faktor 4,5 in Maschinenrichtung ("in die Länge") verstreckt wird, wobei für den konkreten Prozess Werte zwischen 3,5 und 5 zulässig sind. Ferner muss die Folie eine Temperatur von 130 °C haben, dabei ist ein Einstellbereich von 128 bis 132 °C erlaubt.

Dieser Faktor kann als "MD Reckverhältnis" bezeichnet werden. Die Folientemperatur wird u.a. "Folientemperatur vor MD-Verstreckung" genannt.

### Verknüpfung

Über geeignete Verfahren, z.B. Maschinen-Lern-Algorithmen (Machine Learning Algorithms), verknüpft das Prozessmodell Produktionsgrößen und Produkteigenschaften. Anders formuliert heißt dies, dass im Rahmen dieses Prozessmodells das "Was" mit dem "Wie" verknüpft wird, also mit anderen Worten was wird wie produziert.
Diese Verknüpfung erfolgt bidirektional. Dabei ist auch explizit oder implizit festgelegt, welche Produktionsgrößen in welchem Grad Einfluss auf welche haben.

Beispiel: Das Prozessmodell des Prozesses "biaxiale Verstreckung von Polypropylen-Folie" sagt aus, dass eine Folie die um den Faktor 4,5 in Maschinenrichtung ("in die Länge") verstreckt wird und dabei eine Temperatur von 130 °C hat, eine Zugfestigkeit von 200 MPa haben wird.

Umgekehrt sagt das Prozessmodell aus, dass zur Erreichung einer Zugfestigkeit von 200 MPa die Folie um den Faktor 4,5 in Maschinenrichtung verstreckt werden muss, bei einer Folientemperatur von 130 °C.

### Abstrahierung von einer konkreten Anlage

Aus Sicht des Prozessmodells spielt es keine Rolle, wie eine Maschine beschaffen und eingestellt sein muss, damit bestimmte Produktionsgrößen vorliegen und bestimmte Produkteigenschaften erreicht werden.

Beispiel: Es spielt keine Rolle, wie die o.g. Folientemperatur von 130 °C erreicht wird. Dies kann beispielsweise durch den Transport der Folie über beheizte Walzen geschehen, durch das Vorbeiführen der Folie an geeigneten Infrarotstrahlern, durch eine noch zu entwickelnde Vorgehensweise oder eine Kombination aus mehreren Vorgehensweisen. Entsprechend ist es nicht Gegenstand des Prozessmodells, wie eventuelle Walzentemperaturen, Infrarotstrahler oder andere Maschinenteile eingestellt sein müssen.

### Abgrenzung zum Sensormodell

Diese soeben genannten Maschineneinstellungen sind zusammen mit an der Maschine vorgenommenen Messungen die Maschinengrößen. Sie werden über das Sensormodell mit den Prozessgrößen (Produkteigenschaften und Produktionsgrößen) in Beziehung gesetzt.

Zwar bilden sowohl Prozess- als auch Sensormodell Zusammenhänge ab, das Prozessmodell ist dabei jedoch unabhängig von einer konkreten Maschine, wohingegen das Sensormodell vollständig maschinenspezifisch ist, d.h. es muss normalerweise speziell für jede Maschine erstellt werden.

Beispiel: Die Angabe, wie die o.g. Folientemperatur von 130 °C an einer konkreten Maschine erreicht wird, kommt aus dem Sensormodell.

Bei einer Maschine mit beheizten Walzen gibt das Sensormodell der Maschine die Walzentemperaturen an, mit denen die Folientemperatur am besten zu erreichen ist. Bei einer Maschine mit Infrarotstrahlern gibt das Sensormodell der Maschine die Intensitäten der Strahler an, womit die Folientemperatur von 130 °C zu erreichen ist. Zusätzlich zu den beheizten Walzen können auch IR-Strahler installiert sein.

Beide genannten Sensormodelle unterscheiden sich grundlegend, bilden aber mit Hilfe der Prozessgröße "Folientemperatur" eine einheitliche Schnittstelle zu einem Prozessmodell, das ohne Anpassung auf beiden Sensormodellen aufsetzen kann.

### Beispiele und Anwendungsszenarien

Gegeben sei ein bestimmter Prozess, der ausgehend von bestimmten Produktionsgrößen bestimmte Produkteigenschaften erreicht. Die Verknüpfung zwischen Produktionsgrößen und Produkteigenschaften ist durch ein Prozessmodell gewährleistet.

Dieser Prozess läuft auf einer bestimmten Anlage. Über das Sensormodell dieser Anlage gibt es eine Verknüpfung zwischen den Prozessgrößen des o.g. Prozesses und den Maschinengrößen dieser Anlage. Prozessseitig erfolgt die Verknüpfung mit den Prozessgrößen, also den Produktionsgrößen und den Produkteigenschaften, allerdings jedoch dergestalt, dass es überwiegend zu einer Verknüpfung mit Produktionsgrößen kommt und mit Produkteigenschaften nur dort, wo diese entweder messtechnisch erfasst werden, oder in einem einfachen Zusammenhang mit Maschinengrößen stehen.

Vor diesem Hintergrund sollen einige Beispiele erläutert werden, was bei einer entsprechenden Steuerungsanlage unter Verwendung des erläuterten Prozessmoduls/Prozessmodells (welches die Produkteigenschaften eines ganz bestimmten Kunststoff-Folienfilms mit den zugehörigen Produktionsgrößen verknüpft), welches auf einem Sensormodul/Sensormodell aufbaut (welches die Produktionsgrößen wie beispielsweise Temperatur, Längs- und Querreckkräfte etc. mit den einstellbaren Maschinengrößen verknüpft) durchführbar ist.

Beispiel für ein Nachführen der Temperaturen bei einer Geschwindigkeitserhöhung in Abzugsrichtung der Kunststoff-Folienbahn sowie in Querreckrichtung:
Eine höhere Geschwindigkeit in Abzugsrichtung des Kunststoff-Folienfilms würde letztlich zu einer Reduzierung der Verweilzeit bestimmter Abschnitte des Kunststoff-Folienfilms in den vorgesehenen Heiz- oder Kühlphasen oder Zonen führen. Dadurch würde sich also die Folientemperatur verändern. Von daher ist in der Regel in solchen Fällen eine Anpassung der Temperatureinstellung erforderlich, wodurch die Erhöhung der Geschwindigkeit eine Kompensation für den Temperaturabfall (im Falle einer kürzeren Verweilzeit in einer Heiz-Zone) ermöglicht. Eine "intelligente Steuerungsvorrichtung" wie im Rahmen der vorliegenden Erfindung erläutert könnte die gewünschte Temperaturanpassung automatisch durchführen, also die entsprechende Temperatureinstellung automatisch auf den optimalen Wert nach führen.

Möglich wäre auch eine halbautomatische Umsetzung, wonach die erfindungsgemäße Steuerungsvorrichtung einen Vorschlag unterbreitet (der auf dem Display der visualisierten Prozesssteuerung angezeigt wird), um dann der Bedienungsperson den Freiraum zu eröffnen, manuell die entsprechenden Einstellungen abzuändern bzw. vorzunehmen.

### Energieeffizientes Anpassen der Vorheizung in einer Querreckzone (TDO):

Nachfolgend soll auf einen möglichen Reglungsabschnitt eingegangen werden, der die Erreichung der Produktionseigenschaft "Folientemperatur" vor dem Breitstrecken, d.h. nach der Vorheizung im Ofen (TDO) betrifft. Diese Folientemperatur ist über ein Sensormodell mit den in der Vorheizzone eingestellten Lufttemperaturen und Ventilatordrehzahlen in Beziehung gesetzt. Wir betrachten an dieser Stelle die Folientemperatur als fest vorgegeben, entscheidend im Szenario ist, mit welchen Maschinengrößen das Sensormodell diese Folientemperatur erreicht.

Die entsprechende Anpassung kann dabei beispielsweise auf zwei Wegen durchgeführt werden, nämlich durch
• Erhöhung der Temperaturen, und/oder
• Erhöhung der Ventilatordrehzahl (wodurch eine größere Menge erwärmter Luft zugeführt werden kann).

Von daher ist die Fragestellung, welcher Weg möglicherweise bei den beiden optionalen Lösungen der bessere ist, nämlich
• höhere Ventilatordrehzahlen bei moderaten Lufttemperaturen zu wählen, um dabei den Wärmeübergang zwischen der heißen Ofenluft und der Folie zu erhöhen, jedoch mit einer daraus resultierenden hohen elektrischen Leistungsaufnahme bei niedriger thermischer Leistungsaufnahme und/oder
• höhere Temperaturen zu bevorzugen, und dabei möglicherweise die Ventilatordrehzahlen zu erniedrigen, was mit einer eher niedrigen elektrischen aber höheren thermischen Leistungsaufnahme einhergeht.

Im Rahmen der erfindungsgemäßen Steuerungsvorrichtung kann dabei ermittelt werden, welche Temperaturen und welche Ventilatordrehzahlen am energieeffizientesten sind.

### Qualitätsoptimierung der Folieneigenschaft "Zugfestigkeit der Folie" (MD Tensile Strength)

Möchte z.B. eine Bedienungsperson beim gegebenen Prozess die Zugfestigkeit erhöhen, so kann er die gewünschte Erhöhung in dem entsprechenden Bedien-Terminal in Form der Visualisierung des Sensor- und Prozessmoduls einstellen. Die Produkteigenschaft-Folien-Zugfestigkeit wird dadurch erhöht, beispielsweise von 200 MPa auf 220 MPa.

Das Prozessmodell ermittelt nun neue Produktionsgrößen, um diese Produkteigenschaft zu erreichen. Die Zugfestigkeit lässt sich theoretisch durch die Produktionsgrößen "Folientemperatur beim Verstrecken" und/oder "MD Reckverhältnis" beeinflussen. Über einen geeigneten Algorithmus bestimmt das System beispielsweise eine Verringerung der Folientemperatur von 130 auf 129 °C und eine Erhöhung des Reckverhältnisses von 4,5 auf 4,7.

Dadurch haben sich die Produktionsgrößen "Folientemperatur beim Verstrecken" und "MD Reckverhältnis" geändert.

Das Sensormodell der Anlage bestimmt nun, wie sich die neue Folientemperatur erreichen lässt, unter Einstellung von folgenden Maschinengrößen: Chill Roll Temperatur, Wasserbad Temperatur, Chill Roll Geschwindigkeit und zehn Temperaturen der MDO Vorheizwalzen. Als Messwerte verwendet es die Schmelzetemperatur und die Cast-Film-Dicke.

Das Bestimmen der optimalen Einstellungen kann beispielsweise durch einen Optimierungsalgorithmus erfolgen, der als Nebenbedingung den Energiebedarf des Prozesses minimiert. Diese Minimierung des Energiebedarfs ist hier besonders gut möglich, da einem Abkühl- unmittelbar ein Aufheizprozess folgt.

Außerdem bestimmt das Sensormodell die neuen Antriebseinstellungen die sich aus der Erhöhung des Reckverhältnisses ergeben. Dies ist eine einfache Rechnung, bei bestimmten Anlagen sogar nur eine 1:1 Zuordnung des Reckverhältnisses zu einem Geschwindigkeitsfaktor eines Antriebs.

### Qualitätsoptimierung der Folieneigenschaft "Haze" (Trübung)

Möchte eine Bedienungsperson bei einem vorgegebenen Prozess beispielsweise eine optisch klarere Folie produzieren, dann wird er in dem erläuterten System, also der erfindungsgemäßen Steuerungsvorrichtung den Wert bezüglich der Produktionseigenschaft "Haze" (Grad der Trübung der Folie) von beispielsweise 3 % auf 1,5 % ändern.

Das Prozessmodell ermittelt nun neue Produktionsgrößen, um diese Produkteigenschaft zu erreichen. Sie lässt sich theoretisch durch die Produktionsgrößen "Folientemperatur nach der Casting Einheit" (also der Kühlwalzeneinheit, an die von der Breitschlitzdüse der Schmelzfilm übergeben wird) und/oder "MD Reckverhältnis" (also das Reckverhältnis in Maschinenlängsrichtung) beeinflussen. Eine Änderung des Längs-Reckverhältnisses MD ist jedoch unerwünscht, da es kaum Einfluss hat und die Anlagengeschwindigkeit gleich bleiben soll. Über einen geeigneten Algorithmus bestimmt das System nun beispielsweise eine Verringerung der Folientemperatur (nach der Kühlwalzeneinheit) von 60 auf 50 °C. Das Längs-Reckverhältnis MD bleibt unverändert.

Dadurch hat sich die Produktionsgröße "Folientemperatur nach der Kühl-Einheit (Casting Unit)" geändert. die Casting Unit wird hier nur als ein Beispiel als beeinflussender Prozessabschnitt erwähnt; größeren Einfluss haben Rohstoffparameter, Rezeptur und Annealingtemperaturen etc.

Das Sensormodell der Anlage bestimmt nun, wie sich die neue Folientemperatur erreichen lässt, unter möglicher Einstellung von folgenden Maschinengrößen: Kühlwalze (Chill-Roll) Temperatur, Wasserbad Temperatur und Chill Roll Geschwindigkeit. Als Messwerte verwendet es die Schmelzetemperatur und die Cast-Film-Dicke. Von den möglichen Einstellungen soll die Chill Roll Geschwindigkeit jedoch unverändert bleiben, da diese unmittelbaren Einfluss auf die gesamte Anlagengeschwindigkeit hat.

Das Bestimmen der optimalen Einstellungen kann beispielsweise durch einen Optimierungsalgorithmus erfolgen, der als Nebenbedingung den Energiebedarf des Prozesses minimiert.

### Verringerung der Umstellzeiten bei Produktwechsel

Nachfolgend wird davon ausgegangen, dass eine Bedienungsperson der Anlage in einem Prozess dickere Folien produzieren möchte. Dazu erhöht er in einem geeigneten System die Produkteigenschaft "Endfilm-Dicke" von beispielsweise 20 auf 25 µm.

Diese Produkteigenschaft ist vereinfacht ausgedrückt unabhängig von jeglichen Produktionsgrößen mit Ausnahme der Cast-Film-Dicke. Der Prozess bleibt gleich, lediglich die Folie wird dicker.

Auf Ebene des Sensormodells muss nun die "Chill Roll Geschwindigkeit" reduziert und/oder die Maschinengröße "Extruder Ausstoß" erhöht werden. Da eine Ausstoßerhöhung einer Geschwindigkeitsreduzierung vorzuziehen ist, erhöht das Sensormodell den Extruderausstoß von beispielsweise 4000 auf 5000 kg/h.

Es zeigt sich jedoch außerdem, dass die Produktionsgrößen Längsreck-Recktemperatur (MDO) Querreck-Recktemperatur (TDO) bei der erhöhten Foliendicke mit den gegebenen Temperatureinstellungen nicht mehr zu erreichen sind. Außerdem wäre der Cast-Film zu warm, also die Produktionsgröße "Cast-Film-Temperatur" zu hoch.

Das Sensormodell reagiert darauf durch die Anpassung folgender Maschineneinstellungen: Chill Roll Temperatur, Wasserbad Temperatur, MDO Walzentemperaturen, TDO Temperaturen und Ventilatordrehzahlen. Als Messwerte verwendet es die Schmelzetemperatur und die zu erwartende Cast-Film-Dicke.

Diese Einstellungen werden so optimiert, dass die ursprünglichen Produktionsgrößen wieder erreicht werden.

Dabei ist wichtig festzustellen, dass die gesamte Umstellung in einem "Was-Wäre-Wenn"-Szenario betrachtet werden kann, d.h. das Sensormodell kann vorhersagen, welche Produktionsgrößen durch eine Erhöhung des Ausstoßes betroffen wären und kann dazu die passenden Maschineneinstellungen vorab berechnen. Sind alle Werte berechnet, können die Maschineneinstellungen beispielsweise in kleinen Schritten geändert werden bis die neuen Einstellungen erreicht sind.

### Übertragung von Anlageneinstellungen zwischen ähnlichen Anlagen

Nachfolgend wird davon ausgegangen, dass eine Bedienungsperson der Anlage ein neues Produkt herstellen möchte, also einen neuen Kunststoff-Folienfilm oder Cast-Film, den er auf einer andern Anlage getestet hat, und den er nunmehr auf einer von der Testanlage unterschiedlichen Anlage herstellen möchte. Die KunststoffFolien-Produktionsanlagen sind jedoch nicht identisch, sondern weichen in kleinen aber wesentlichen Details voneinander ab. Eine 1:1 Übernahme aller Maschineneinstellungen ist daher nicht ohne weiteres möglich.

Das Bedienungspersonal muss dazu also keine Maschineneinstellungen übertragen, sondern lediglich die Prozessgrößen von Anlage A auf Anlage B. Dabei wird es dem Sensormodell der Anlage B überlassen, geeignete Maschinengrößen für diese Prozessgrößen zu finden. Ähnlich wie bei den o.g. Optimierungs- oder Umstellszenarien kann dies ebenfalls durch geeignete Optimierungsalgorithmen erfolgen, die ebenfalls bestimmte Randbedingungen wie den Energiebedarf berücksichtigen können.

Aufgrund der bei Optimierungsalgorithmen üblicherweise mit zunehmender Parameteranzahl stark ansteigenden Rechenzeit könnte es erforderlich werden, verstärkt auf schnellere Berechnungsmodelle oder evtl. Tabellen zur Unterstützung zurückzugreifen, doch prinzipiell ist der Ablauf auf Ebene des Sensormodells vergleichbar zu einer der o.g. Qualitätsoptimierungen. Der Unterschied liegt lediglich darin, dass es nicht nur für vergleichsweise wenige Prozessgrößen geeignete Maschinengrößen finden muss, sondern für alle Prozessgrößen.

Gut funktionierende Sensormodelle und weitgehende Ähnlichkeiten der beiden Anlagen vorausgesetzt, sollte das Sensormodell der Anlage B Maschineneinstellungen finden, die relativ ähnlich zu denen der Anlage A sind.

### Übertragung von einer kleineren Laboranlage auf eine größere Produktionsanlage (Upscaling)

Im Folgenden wird davon ausgegangen, dass ein neues Produkt mit einer Anlage erzeugt werden soll, welches zuvor auf einer Laboranlage getestet wurde. Durch die Produktion des zuvor auf einer kleineren Anlage getesteten Produkts müssen nunmehr die entsprechenden Einstellungen für die größere Produktionsanlage gefunden werden, es handelt sich insoweit also um ein so genanntes Upscaling eines entsprechenden Prozesses.

Die prinzipielle Vorgehensweise bei einem Upscaling unterscheidet sich für das System nicht von einer Übertragung von Anlageneinstellungen zwischen ähnlichen Anlagen. Hier greift die Abstrahierung des Prozesses im besonderen Maße: Das Sensormodell der Produktionsanlage wird höchstwahrscheinlich deutlich andere Maschineneinstellungen finden als das Sensormodell der Laboranlage. Der Prozess jedoch ist der gleiche, womit die Prozessgrößen auch hier unverändert von der Labor- auf die Produktionsanlage übernommen werden können.

### Assistenzsysteme

Die erfindungsgemäße Steuerungsvorrichtung mit einem Sensormodul und einem Prozessmodul, die in einer einheitlichen Hardware untergebracht sein können oder beispielsweise auch hardwaremäßig in ein Sensormodul und ein Prozessmodul getrennt und beliebig kombinierbar sind, eignet sich aufgrund der Mikroprozessor-gesteuerten Gesamtstruktur und Aufbaus der Schaltungseinrichtung auch dazu, nunmehr bestimmte Assistenzsysteme zu implementieren.

Soll also eine bestimmte wie vorstehend erläuterte Änderung an einer Anlage durchgeführt werden oder eine Umstellung an der Anlage etc., so kann die Steuerungsvorrichtung die entsprechenden Maschinenwerte automatisch oder halbautomatisch finden (im Rahmen eines Vorschlags) oder das Bedienungspersonal wird bei vorzunehmenden Änderungen durch das Assistenzsystem Schritt für Schritt angeleitet, indem jeweils bestimmte Vorschläge unterbreitet werden, die dann akzeptiert werden können, mit der Folge, dass die entsprechenden Werte gesetzt werden. Diese Assistenzsysteme können bei Bedarf aber auch unterschiedliche Vorschläge unterbreiten, beispielsweise ob der entsprechende Produktionsprozess unter einem höheren Energieaufwand unter Energieeinsparnis energietechnisch günstiger durchgeführt werden soll. Entsprechend findet die erfindungsgemäße Steuerungsvorrichtung unterschiedliche bevorzugte Einstellwerte für die Maschinengrößen.

Das Bedienungspersonal muss sich dabei wie ausgeführt jeweils nur um den eigentlich herzustellenden Kunststoff-Folienfilm kümmern, da von dessen Produkteigenschaften letztlich die Prozessgrößen abgeleitet sind und über das zugehörige Prozessmodell und das darunter angesiedelte Sensormodell dann letztlich die Maschinengrößen richtig eingestellt werden können.

## Patentansprüche

1. Steuerungsvorrichtung zur Herstellung von Kunststofffolien, insbesondere zur Herstellung von Kunststoff-Flachfolien, Cast-Filmen, monoaxial, uniaxial, sequenziell biaxial oder simultan biaxial gereckten Kunststofffolien oder zur Herstellung von Blas-Folien einschließlich Double-Bubble-Folien, Tri-Bubble-Folien oder allgemein mehr-Bubble-Folien, mit folgenden Merkmalen:
- die Steuerungsvorrichtung ist zumindest zwei-stufig aufgebaut,
- die Steuerungsvorrichtung umfasst dazu
a) zum einen ein Prozessmodell oder Prozessmodul mit implementiertem Prozessmodell,
b) zum anderen ein Sensormodell oder Sensormodul mit implementiertem Sensormodell,
- über das maschinenunabhängige Prozessmodul oder Prozessmodell sind Prozessgrößen und/oder Produkteigenschaften mit Produktionsgrößen hinsichtlich der herzustellenden Kunststofffolie verbunden oder verknüpft,
- über das maschinenabhängige Sensormodul oder Sensormodell sind Produktionsgrößen für den herzustellenden Kunststofffilm mit einstellbaren Maschinengrößen verbunden oder verknüpft,
- das maschinenunabhängige Prozessmodul oder Prozessmodell und das maschinenabhängige Sensormodul oder Sensormodell sind über Produktionsgrößen miteinander verknüpft oder verknüpfbar,
- zu den Prozessgrößen und/oder Produkteigenschaften gehören ein oder mehrere Werte aus der Gruppe Zugfestigkeit, E-Modul, Foliendicke, Filmtrübung, Schrumpf des Films,
- zu den Produktionsgrößen gehören mehrere Produktionsgrößen aus der Gruppe umfassend Kunststoff-Folientemperatur, auf den Kunststoff-Film in Querrichtung und/oder Längsrichtung einwirkende Folienzugkräfte,
- zu den einstellbaren Maschinengrößen gehören mehrere Maschinengrößen aus der Gruppe umfassend die Kühlwassertemperatur, die Aufheiztemperatur von Heizanlagen, Lüfterdrehzahlen von Lüftereinrichtungen, Zugspannungen in Quer- und/oder Längsrichtung der abzuziehenden Kunststoffbahn;
**dadurch gekennzeichnet, dass**
- das Prozessmodul und/oder Prozessmodell bidirektional aufgebaut ist, derart, dass bezüglich vorgebbarer Prozessgrößen damit verbundene, korrelierte oder davon abstrahierte Produktionsgrößen bestehen und umgekehrt für vorgebbare Produktionsgrößen damit in Verbindung stehende oder davon abstrahierte oder damit korrelierte Prozessgrößen für die Folienbehandlung bestehen, und dass
- das Sensormodell bidirektional aufgebaut ist, derart, dass zu vorgebbaren Prozessgrößen damit korrelierte oder verbundene Maschinengrößen bestehen und umgekehrt unter Vorgabe von einstellbaren Maschinengrößen davon abgeleitete oder damit verbundene oder verknüpfte Werte von Produktionsgrößen bestehen.

2. Steuerungsvorrichtung nach Anspruch 1, **dadurch gekennzeichnet, dass** für verschiedene Stufen des Produktionsprozesses eines mehrere aufeinanderfolgende Prozessstufen umfassenden Herstellvorganges mehrere Anlagen-Zonen oder Anlagen-Segmente vorgesehen sind, wobei innerhalb einer jeweiligen Anlagen-Zone oder eines jeweiligen Anlagen-Segments gleiche Verfahrensparameter vorgegeben sind, und dass ein entsprechendes Sensormodul und/oder Sensormodell dieser Anlagen-Zone oder diesem Anlagen-Segment zugeordnete Maschinengrößen mit Produktionsgrößen und das zugehörige Prozessmodul und/oder Prozessmodell entsprechende Produktionsgrößen mit Prozessgrößen entsprechend verbindet, korreliert und/oder verknüpft.

3. Steuerungsvorrichtung nach Anspruch 2, **dadurch gekennzeichnet, dass** die Anlagen-Zonen- und/oder Anlagen-Segment-abhängigen Prozessgrößen entsprechend der Bewegungs- und/oder Abzugsbahn des Kunststoff-Films stufenweise miteinander derart verknüpft sind, dass die Ausgangs-Prozesswerte einer vorausgehenden Zone oder eines vorausgehenden Segments den entsprechenden Eingangswerten einer nachfolgenden Anlagen-Zone oder eines nachfolgenden Anlagen-Segments entsprechen.

4. Steuerungsvorrichtung nach Anspruch 2 oder 3, **dadurch gekennzeichnet, dass** die Zonen- oder Segment-abhängigen Prozessgrößen bezüglich des zu behandelnden Kunststoff-Films in Richtung der fortbewegten Materialbahn so miteinander verknüpft sind, dass die Prozessgrößen am Ausgang der letzten Zone oder des letzten Segments den Produkteigenschaften der zu behandelnden Kunststoffbahn entsprechen.

5. Steuerungsvorrichtung nach einem der Ansprüche 1 bis 4, **dadurch gekennzeichnet, dass** eine Anzeigeneinrichtung vorgesehen ist, in der die entsprechenden Produkteigenschaften, Prozessgrößen und Maschinengrößen visualisiert dargestellt und/oder eingebbar sind.

6. Steuerungsvorrichtung nach einem der Ansprüche 1 bis 5, **dadurch gekennzeichnet, dass** die Steuerungsvorrichtung so aufgebaut ist, dass die Maschinengrößen bei veränderter Einstellung der Prozessgrößen bezüglich eines herzustellenden Kunststoff-Folienfilms mittels der Steuerungsvorrichtung automatisiert eingestellt werden.

7. Steuerungsvorrichtung nach einem der Ansprüche 1 bis 5, **dadurch gekennzeichnet, dass** die Steuerungsvorrichtung so aufgebaut ist, dass die Maschinengrößen bei veränderter Einstellung der Prozessgrößen bezüglich eines herzustellenden Kunststoff-Folienfilms mittels der Steuerungsvorrichtung halbautomatisch vorgeschlagen werden, die anschließend bestätigt und/oder verändert werden können.

8. Steuerungsvorrichtung nach einem der Ansprüche 1 bis 7, **dadurch gekennzeichnet, dass** das Prozessmodul und/ oder das Prozessmodell mit unterschiedlichen Sensormodulen und/oder Sensormodellen kombinierbar ist.

9. Verfahren zur Herstellung von Kunststofffolien, insbesondere zur Herstellung von Kunststoff-Flachfolien, Cast-Filmen, monoaxial, uniaxial, sequentiell biaxial oder simultan biaxial gereckten Kunststofffolien oder zur Herstellung von Blas-Folien einschließlich Double-Bubble-Folien, Tri-Bubble-Folien oder allgemein mehr-Bubble-Folien mit folgenden Verfahrensschritten:
- es wird eine Steuerungsvorrichtung verwendet, die zumindest zweistufig aufgebaut ist,
- dazu wird eine Steuerungsvorrichtung verwendet, die
a) zum einen ein Prozessmodell oder Prozessmodul mit implementiertem Prozessmodell, und
b) zum anderen ein Sensormodell oder Sensormodul mit implementiertem Sensormodell
umfasst,
- das verwendete maschinenunabhängige Prozessmodul oder Prozessmodell ist so aufgebaut, dass Prozessgrößen und/oder Produkteigenschaften mit Produktionsgrößen hinsichtlich der herzustellenden Kunststofffolie verbunden oder verknüpft sind,
- das verwendete maschinenabhängige Sensormodul oder Sensormodell ist so aufgebaut, dass Produktionsgrößen für den herzustellenden Kunststofffilm mit einstellbaren Maschinengrößen verbunden oder verknüpft sind,
- das maschinenunabhängige Prozessmodul oder Prozessmodell und das maschinenabhängige Sensormodul oder Sensormodell sind über Produktionsgrößen miteinander verknüpft oder verknüpfbar,
- zu den Prozessgrößen und/oder Produkteigenschaften gehören ein oder mehrere Werte aus der Gruppe Zugfestigkeit, E-Modul, Foliendicke, Filmtrübung, Schrumpf des Films,
- zu den Produktionsgrößen gehören mehrere Produktionsgrößen aus der Gruppe umfassend Kunststoff-Folientemperatur, auf den Kunststoff-Film in Querrichtung und/oder Längsrichtung einwirkende Folienzugkräfte,
- zu den einstellbaren Maschinengrößen gehören mehrere Maschinengrößen aus der Gruppe umfassend die Kühlwassertemperatur, die Aufheiztemperatur von Heizanlagen, Lüfterdrehzahlen von Lüftereinrichtungen, Zugspannungen in Quer- und/oder Längsrichtung der abzuziehenden Kunststoffbahn, und **dadurch gekennzeichnet, dass**
- ein Prozessmodul und/oder Prozessmodell verwendet wird, welches bidirektional derart aufgebaut ist, dass bezüglich vorgebbarer Prozessgrößen damit verbundene, korrelierte oder davon abstrahierte Produktionsgrößen bestehen und umgekehrt für vorgebbare Produktionsgrößen damit in Verbindung stehende oder davon abstrahierte oder damit korrelierte Prozessgrößen für die Folienbehandlung bestehen, und dadurch, dass
- ein Sensormodell verwendet wird, welches bidirektional derart aufgebaut ist, dass zu vorgebbaren Prozessgrößen damit korrelierte oder verbundene Maschinengrößen bestehen und umgekehrt unter Vorgabe von einstellbaren Maschinengrößen davon abgeleitete oder damit verbundene oder verknüpfte Werte von Produktionsgrößen bestehen.

10. Verfahren nach Anspruch 9, **dadurch gekennzeichnet, dass** für verschiedene Stufen des Produktionsprozesses eines mehrere aufeinanderfolgende Prozessstufen umfassenden Herstellvorganges mehrere Anlagen-Zonen oder Anlagen-Segmente vorgesehen sind, wobei innerhalb der jeweiligen Anlagen-Zone oder des jeweiligen Anlagen-Segments gleiche Verfahrensparameter vorgegeben werden, und dass mittels eins Sensormoduls und/oder Sensormodells dieser Anlagen-Zone oder diesem Anlagen-Segment zugeordnete Maschinengrößen mit Produktionsgrößen und mittels zugehörigen Prozessmoduls und/oder Prozessmodells entsprechende Produktionsgrößen mit Prozessgrößen verbunden, korreliert und/oder verknüpft werden.

11. Verfahren nach Anspruch 9 oder 10, **dadurch gekennzeichnet, dass** die Anlagen-Zonen- und/oder Anlagen-Segment-abhängigen Prozessgrößen entsprechend der Bewegungs- und/oder Abzugsbahn des Kunststoff-Films stufenweise miteinander derart verknüpft werden, dass die Ausgangs-Prozesswerte einer vorausgehenden Zone oder eines vorausgehenden Segments den entsprechenden Eingangswerten einer nachfolgenden Zone oder eines nachfolgenden Segments entsprechen.

12. Verfahren nach Anspruch 10 oder 11, **dadurch gekennzeichnet, dass** die Zonen- oder Segment-abhängigen Prozessgrößen bezüglich des zu behandelnden Kunststoff-Films in Richtung der fortbewegten Materialbahn so miteinander verknüpft werden, dass die Prozessgrößen am Ausgang der letzten Zone oder des letzten Segments den Produkteigenschaften der zu behandelnden Kunststoffbahn entsprechen.

13. Verfahren nach einem der Ansprüche 9 bis 12, **dadurch gekennzeichnet, dass** eine Anzeigeneinrichtung verwendet wird, in der die entsprechenden Produkteigenschaften, Prozessgrößen und Maschinengrößen visualisiert dargestellt und/oder eingegeben werden.

14. Verfahren nach einem der Ansprüche 9 bis 13, **dadurch gekennzeichnet, dass** eine Steuerungsvorrichtung verwendet wird, dass die Maschinengrößen bei veränderter Einstellung der Prozessgrößen bezüglich eines herzustellenden Kunststoff-Folienfilms mittels der Steuerungsvorrichtung automatisiert eingestellt werden.

15. Verfahren nach einem der Ansprüche 9 bis 13, **dadurch gekennzeichnet, dass** die Steuerungsvorrichtung verwendet wird, dass die Maschinengrößen bei veränderter Einstellung der Prozessgrößen bezüglich eines herzustellenden Kunststoff-Folienfilms mittels der Steuerungsvorrichtung halbautomatisch vorgeschlagen werden, die anschließend bestätigt und/oder verändert werden können.

16. Verfahren nach einem der Ansprüche 9 bis 15, **dadurch gekennzeichnet, dass** das Prozessmodul und/oder das Prozessmodell mit unterschiedlichen Sensormodulen und/oder Sensormodellen kombiniert werden.

## Claims

1. Control apparatus for manufacturing plastics films, in particular for manufacturing plastics flat sheet films, cast films, monoaxially, uniaxially, sequentially biaxially or simultaneously biaxially stretched plastics films, or for manufacturing blown films, including double-bubble films, tri-bubble films or multi-bubble films in general, having the following features:
- the control apparatus is designed so as to be at least two-stage,
- for this purpose, the control apparatus comprises
a) a process model or a process module having an implemented process model on the one hand, and
b) a sensor model or a sensor module having an implemented sensor model on the other hand,
- the machine-independent process module or process model links or associates process variables and/or product characteristics with production variables with respect to the plastics film to be manufactured,
- the machine-dependent sensor module or sensor model links or associates production variables for the plastics film to be manufactured with settable machine variables,
- the machine-independent process module or process model and the machine-dependent sensor module or sensor model are or can be mutually associated by production variables,
- the process variables and/or product characteristics include one or more values from the group of tensile strength, E-modulus, film thickness, film turbidity and the shrinkage of the film,
- the production variables include a plurality of production variables from the group comprising plastics film temperature and film tensile forces acting on the plastics film in the transverse direction and/or longitudinal direction,
- the settable machine variables include a plurality of machine variables from the group comprising the cooling water temperature, the heating temperature of heating systems, fan speeds of ventilation means and tensile stresses in the transverse and/or longitudinal direction of the plastics web that is to be drawn off;
**characterised in that**
- the process module and/or process model is bidirectional, such that, with respect to specifiable process variables, production variables result that are linked therewith, correlated therewith or abstracted therefrom and, vice versa, for specifiable production variables, process variables for the film treatment result that are linked therewith or abstracted therefrom or correlated therewith, and **in that**
- the sensor model is bidirectional, such that specifiable process variables result in machine variables that are correlated or linked therewith and, vice versa, specifying settable machine variables results in values of production variables that are derived therefrom or linked or associated therewith.

2. Control apparatus according to claim 1, **characterised in that** a plurality of plant zones or plant segments is provided for different stages of the production process of a manufacturing procedure comprising a plurality of successive process stages, identical method parameters being specified within each plant zone or each plant segment, and **in that** a corresponding sensor module and/or sensor model accordingly links, correlates and/or associates machine variables assigned to said plant zone or said plant segment with production variables, and the related process module and/or process model accordingly links, correlates and/or associates corresponding production variables with process variables.

3. Control apparatus according to claim 2, **characterised in that** the process variables that are dependent on the plant zones and/or plant segments are mutually associated in stages, according to the movement and/or draw-off path of the plastics film, such that the output process values of a preceding zone or of a preceding segment correspond to the corresponding input values of a following plant zone or a following plant segment.

4. Control apparatus according to either claim 2 or claim 3, **characterised in that** the process variables that are dependent on the zones or segments are mutually associated, with respect to the plastics film to be treated, in the direction of the advancing material web, such that the process variables at the output of the last zone or of the last segment correspond to the product characteristics of the plastics web to be treated.

5. Control apparatus according to any of claims 1 to 4, **characterised in that** a display means is provided, in which the corresponding product characteristics, process variables and machine variables are visually displayed and/or can be input.

6. Control apparatus according to any of claims 1 to 5, **characterised in that** the control apparatus is designed such that, when the process variables relating to a plastics film to be manufactured are set differently, the machine variables are set automatically by the control apparatus.

7. Control apparatus according to any of claims 1 to 5, **characterised in that** the control apparatus is designed such that, when the process variables relating to a plastics film to be manufactured are set differently, the machine variables are proposed semi-automatically by the control apparatus and can subsequently be confirmed and/or amended.

8. Control apparatus according to any of claims 1 to 7, **characterised in that** the process module and/or the process model can be combined with various sensor modules and/or sensor models.

9. Method for manufacturing plastics films, in particular for manufacturing plastics flat sheet films, cast films, monoaxially, uniaxially, sequentially biaxially or simultaneously biaxially stretched plastics films, or for manufacturing blown films, including double-bubble films, tri-bubble films or multi-bubble films in general, comprising the following method steps:
- a control apparatus is used which is designed so as to be at least two-stage,
- for this purpose, a control apparatus is used that comprises
a) a process model or a process module having an implemented process model on the one hand, and
b) a sensor model or a sensor module having an implemented sensor model on the other hand,
- the machine-independent process module or process model used is designed such that process variables and/or product characteristics are linked or associated with production variables with respect to the plastics film to be manufactured
- the machine-dependent sensor module or sensor model used is designed such that production variables for the plastics film to be manufactured are linked or associated with settable machine variables
- the machine-independent process module or process model and the machine-dependent sensor module or sensor model are or can be mutually associated by production variables
- the process variables and/or product characteristics include one or more values from the group of tensile strength, E-modulus, film thickness, film turbidity and the shrinkage of the film,
- the production variables include a plurality of production variables from the group comprising plastics film temperature and film tensile forces acting on the plastics film in the transverse direction and/or longitudinal direction,
- the settable machine variables include a plurality of machine variables from the group comprising the cooling water temperature, the heating temperature of heating systems, fan speeds of ventilation means and tensile stresses in the transverse and/or longitudinal direction of the plastics web that is to be drawn off,
and **characterised in that**
- a process module and/or process model is used that is bidirectional, such that, with respect to specifiable process variables, production variables result that are linked therewith, correlated therewith or abstracted therefrom and, vice versa, for specifiable production variables, process variables for the film treatment result that are linked therewith or abstracted therefrom or correlated therewith, and **in that**
- a sensor model is used that is bidirectional, such that specifiable process variables result in machine variables that are correlated or linked therewith and, vice versa, specifying settable machine variables results in values of production variables that are derived therefrom or linked or associated therewith.

10. Method according to claim 9, **characterised in that** a plurality of plant zones or plant segments is provided for different stages of the production process of a manufacturing procedure comprising a plurality of successive process stages, identical method parameters being specified within each plant zone or each plant segment, and **in that** a sensor module and/or sensor model links, correlates and/or associates machine variables assigned to said plant zone or said plant segment with production variables, and the related process module and/or process model links, correlates and/or associates corresponding production variables with process variables.

11. Method according to either claim 9 or claim 10, **characterised in that** the process variables that are dependent on the plant zones and/or plant segments are mutually associated in stages, according to the movement and/or draw-off path of the plastics film, such that the output process values of a preceding zone or of a preceding segment correspond to the corresponding input values of a following zone or a following segment.

12. Method according to either claim 10 or claim 11, **characterised in that** the process variables that are dependent on the zones or segments are mutually associated, with respect to the plastics film to be treated, in the direction of the advancing material web, such that the process variables at the output of the last zone or of the last segment correspond to the product characteristics of the plastics web to be treated.

13. Method according to any of claims 9 to 12, **characterised in that** a display means is used, in which the corresponding product characteristics, process variables and machine variables are visually displayed and/or input.

14. Method according to any of claims 9 to 13, **characterised in that** a control apparatus is used that is such that, when the process variables relating to a plastics film to be manufactured are set differently, the machine variables are set automatically by the control apparatus.

15. Method according to any of claims 9 to 13, **characterised in that** a control apparatus is used that is such that, when the process variables relating to a plastics film to be manufactured are set differently, the machine variables are proposed semi-automatically by the control apparatus and can subsequently be confirmed and/or amended.

16. Method according to any of claims 9 to 15, **characterised in that** the process module and/or the process model can be combined with various sensor modules and/or sensor models.

## Revendications

1. Dispositif de commande pour la fabrication de feuilles en plastique, notamment pour la fabrication de feuilles planes en plastique, de feuilles minces coulées, de feuilles en plastique à étirage monoaxial, uniaxial, biaxial séquentiel ou biaxial simultané ou pour la fabrication de feuilles soufflées y compris de feuilles à soufflage double, à soufflage triple ou plus généralement à soufflage multiple, présentant les particularités suivantes :
- le dispositif de commande est de conception à au moins deux étages,
- le dispositif de commande comprend à cet effet
a) d'une part, un modèle de processus ou un module de processus dans lequel est mis en œuvre un modèle de processus,
b) d'autre part, un modèle de détection ou un module de détection dans lequel est mis en œuvre un modèle de détection,
- le module ou modèle de processus, qui est indépendant de la machine, permet de lier ou d'associer des grandeurs de processus et/ou des propriétés du produit à des grandeurs de production relatives à la feuille plastique à fabriquer,
- le module ou modèle de détection, qui est dépendant de la machine, permet de lier ou d'associer des grandeurs de production concernant le film en plastique à fabriquer à des grandeurs machine réglables,
- le module ou modèle de processus indépendant de la machine et le module ou modèle de détection dépendant de la machine sont ou peuvent être liés l'un à l'autre par le biais de grandeurs de production,
- les grandeurs de processus et/ou les propriétés du produit comprennent une ou plusieurs valeurs issues du groupe constitué par la résistance à la traction, le module de Young, l'épaisseur de feuille, la turbidité du film, la rétraction du film,
- parmi les grandeurs de production se trouvent plusieurs grandeurs de production issues du groupe comprenant la température de la feuille plastique et des forces de traction agissant sur le film en plastique dans le sens transversal et/ou longitudinal,
- parmi les grandeurs machine réglables se trouvent plusieurs grandeurs machine issues du groupe comprenant la température de l'eau de refroidissement, la température de réchauffage d'installations de chauffage, le régime des dispositifs de soufflerie, les contraintes de traction dans le sens transversal et/ou longitudinal de la nappe de matière plastique à étirer ;
**caractérisé en ce que**
- le module de processus et/ou modèle de processus est de conception bidirectionnelle permettant que, étant donné des grandeurs de processus prédéfinissables, il existe des grandeurs de production qui y sont liées, corrélées ou qui en sont abstraites, et inversement pour des grandeurs de production prédéfinissables, il existe des grandeurs de processus relatives au traitement de la feuille qui y sont liées ou corrélées ou qui en sont abstraites, et
- le module de détection et/ou modèle de détection est de conception bidirectionnelle permettant que, concernant des grandeurs de processus prédéfinissables, il existe des grandeurs machine qui y sont corrélées ou liées, et inversement en présence de grandeurs machine réglables prédéfinies, il existe des valeurs de grandeurs de production qui en sont tirées ou qui y sont liées ou associées.

2. Dispositif de commande selon la revendication 1, **caractérisé en ce que,** pour différents étages du processus de production d'une procédure de fabrication comprenant plusieurs étages de processus successifs, il est prévu plusieurs zones d'installation ou segments d'installation, des paramètres de procédé identiques étant prédéfinis à l'intérieur d'une zone d'installation donnée ou d'un segment d'installation donné, et **en ce qu'**un module de détection et/ou modèle de détection correspondant effectue une liaison, corrélation et/ou association entre des grandeurs de production et des grandeurs machines attribuées à cette zone d'installation ou à ce segment d'installation, et le module de processus et/ou modèle de processus qui y appartient effectue en conséquence une liaison, corrélation et/ou association entre des grandeurs de processus et des grandeurs de production correspondantes.

3. Dispositif de commande selon la revendication 2, **caractérisé en ce que** les grandeurs de processus dépendantes de la zone d'installation et/ou du segment d'installation sont associées entre elles graduellement, conformément à la voie de déplacement et/ou de prélèvement du film en plastique, de telle manière que les valeurs de processus de sortie d'une zone antérieure ou d'un segment antérieur correspondent aux valeurs d'entrée respectives d'une zone d'installation subséquente ou d'un segment d'installation subséquent.

4. Dispositif de commande selon la revendication 2 ou 3, **caractérisé en ce que** les grandeurs de processus dépendantes de la zone ou du segment et relatives au film en plastique à traiter sont associées entre elles dans le sens de la nappe de matière en déplacement de telle manière que les grandeurs de processus à la sortie de la dernière zone ou du dernier segment correspondent aux propriétés du produit qui sera issu de la nappe de matière plastique à traiter.

5. Dispositif de commande selon l'une des revendications 1 à 4, **caractérisé en ce qu'**il est prévu un dispositif d'affichage dans lequel sont représentées visuellement et/ou peuvent être saisies les propriétés du produit, grandeurs de processus et grandeurs machine respectives.

6. Dispositif de commande selon l'une des revendications 1 à 5, **caractérisé en ce que** le dispositif de commande est de conception telle que les grandeurs machine peuvent être réglées de façon automatique au moyen du dispositif de commande en cas de modification du réglage des grandeurs de processus concernant un film issu d'une feuille plastique à fabriquer.

7. Dispositif de commande selon l'une des revendications 1 à 5, **caractérisé en ce que** le dispositif de commande est de conception telle que les grandeurs machine sont suggérées de façon semi-automatique au moyen du dispositif de commande en cas de modification du réglage des grandeurs de processus concernant un film issu d'une feuille plastique à fabriquer, et peuvent être confirmées et/ou modifiées par la suite.

8. Dispositif de commande selon l'une des revendications 1 à 7, **caractérisé en ce que** le module de processus et/ou le modèle de processus peuvent être combinés à différents modules de détection et/ou modèles de détection.

9. Procédé pour la fabrication de feuilles en plastique, notamment pour la fabrication de feuilles planes en plastique, de feuilles minces coulées, de feuilles en plastique à étirage monoaxial, uniaxial, biaxial séquentiel ou biaxial simultané ou pour la fabrication de feuilles soufflées y compris de feuilles à soufflage double, à soufflage triple ou plus généralement à soufflage multiple, comprenant les étapes de procédé suivantes, dans lesquelles :
- on emploie un dispositif de commande de conception au moins à deux étages,
- à cet effet, on emploie un dispositif de commande comprenant
a) d'une part, un modèle de processus ou un module de processus dans lequel est mis en œuvre un modèle de processus, et
b) d'autre part, un modèle de détection ou un module de détection dans lequel est mis en œuvre un modèle de détection,
- le module ou modèle de processus indépendant de la machine qui est employé est de conception telle que des grandeurs de processus et/ou des propriétés du produit sont liées ou associées à des grandeurs de production relatives à la feuille plastique à fabriquer,
- le module ou modèle de détection dépendant de la machine qui est employé est de conception telle que des grandeurs de production concernant le film en plastique à fabriquer sont liées ou associées à des grandeurs machine réglables,
- le module ou modèle de processus indépendant de la machine et le module ou modèle de détection dépendant de la machine sont ou peuvent être liés l'un à l'autre par le biais de grandeurs de production,
- les grandeurs de processus et/ou les propriétés du produit comprennent une ou plusieurs valeurs issues du groupe constitué par la résistance à la traction, le module de Young, l'épaisseur de feuille, la turbidité du film, la rétraction du film,
- parmi les grandeurs de production se trouvent plusieurs grandeurs de production issues du groupe comprenant la température de la feuille plastique et des forces de traction agissant sur le film en plastique dans le sens transversal et/ou longitudinal,
- parmi les grandeurs machine réglables se trouvent plusieurs grandeurs machine issues du groupe comprenant la température de l'eau de refroidissement, la température de réchauffage d'installations de chauffage, le régime des dispositifs de soufflerie, les contraintes de traction dans le sens transversal et/ou longitudinal de la nappe de matière plastique à étirer, et
**caractérisé en ce que**
- on emploie un module de processus et/ou modèle de processus de conception bidirectionnelle permettant que, étant donné des grandeurs de processus prédéfinissables, il existe des grandeurs de production qui y sont liées, corrélées ou qui en sont abstraites, et inversement pour des grandeurs de production prédéfinissables, il existe des grandeurs de processus relatives au traitement de la feuille qui y sont liées ou corrélées ou qui en sont abstraites, et
- on emploie un module de détection et/ou modèle de détection de conception bidirectionnelle permettant que, concernant des grandeurs de processus prédéfinissables, il existe des grandeurs machine qui y sont corrélées ou liées, et inversement en présence de grandeurs machine réglables prédéfinies, il existe des valeurs de grandeurs de production qui en sont tirées, ou qui y sont liées ou associées.

10. Procédé selon la revendication 9, **caractérisé en ce que,** pour différents étages du processus de production d'une procédure de fabrication comprenant plusieurs étages de processus successifs, il est prévu plusieurs zones d'installation ou segments d'installation, étant entendu que l'on prédéfinit des paramètres de procédé identiques à l'intérieur de la zone d'installation donnée ou du segment d'installation donné, et **en ce qu'**on effectue, au moyen d'un module de détection et/ou modèle de détection, une liaison, corrélation et/ou association entre des grandeurs de production et des grandeurs machines attribuées à cette zone d'installation ou à ce segment d'installation, et on effectue, au moyen du module de processus et/ou modèle de processus qui y appartient, une liaison, corrélation et/ou association entre des grandeurs de processus et des grandeurs de production correspondantes.

11. Procédé selon la revendication 9 ou 10, **caractérisé en ce qu'**on associe graduellement entre elles les grandeurs de processus dépendantes de la zone d'installation et/ou du segment d'installation, conformément à la voie de déplacement et/ou de prélèvement du film en plastique, de telle manière que les valeurs de processus de sortie d'une zone antérieure ou d'un segment antérieur correspondent aux valeurs d'entrée respectives d'une zone subséquente ou d'un segment subséquent.

12. Procédé selon la revendication 10 ou 11, **caractérisé en ce qu'**on associe entre elles les grandeurs de processus, dépendantes de la zone ou du segment et relatives au film en plastique à traiter, dans le sens de la nappe de matière en déplacement de telle manière que les grandeurs de processus à la sortie de la dernière zone ou du dernier segment correspondent aux propriétés du produit qui sera issu de la nappe de matière plastique à traiter.

13. Procédé selon l'une des revendications 9 à 12, **caractérisé en ce qu'**on emploie un dispositif d'affichage dans lequel sont représentées visuellement et/ou sont saisies les propriétés du produit, grandeurs de processus et grandeurs machine respectives.

14. Procédé selon l'une des revendications 9 à 13, **caractérisé en ce qu'**on emploie un dispositif de commande et **en ce que** les grandeurs machine sont réglées de façon automatique au moyen du dispositif de commande en cas de modification du réglage des grandeurs de processus concernant un film issu d'une feuille plastique à fabriquer.

15. Procédé selon l'une des revendications 9 à 13, **caractérisé en ce qu'**on emploie le dispositif de commande et **en ce que** les grandeurs machine sont suggérées de façon semi-automatique au moyen du dispositif de commande en cas de modification du réglage des grandeurs de processus concernant un film issu d'une feuille plastique à fabriquer, et peuvent être confirmées et/ou modifiées par la suite.

16. Procédé selon l'une des revendications 9 à 15, **caractérisé en ce que** le module de processus et/ou le modèle de processus sont combinés à différents modules de détection et/ou modèles de détection.
